(19)

Europäisches Patentamt
European Patent Office
Office européen des brevets

(11) **EP 4 682 782 A1**

(12) **EUROPEAN PATENT APPLICATION**

(43) Date of publication:
**21.01.2026 Bulletin 2026/04**

(21) Application number: **25189759.1**

(22) Date of filing: **15.07.2025**

(51) International Patent Classification (IPC):
**G06N 20/00** (2019.01)  **G06F 17/10** (2006.01)

(52) Cooperative Patent Classification (CPC):
**G06N 20/00; G06F 17/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.07.2024 JP 2024115589**

(71) Applicant: **FUJITSU LIMITED**
**Kawasaki-shi, Kanagawa 211-8588 (JP)**

(72) Inventor: **AIHARA, Shingo**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **DATA PROCESSING METHOD, DATA PROCESSING APPARATUS, AND COMPUTER PROGRAM**

(57)    A processing unit determines each axial direction of a class coordinate system having an origin corresponding to a class centroid, based on feature vectors of instances in the same class, obtains, for each second instance group corresponding to the axial directions, a set of second generic values for parameters, generates unit vectors representing correction directions for a set of first generic values, based on a first feature vector corresponding to the second instance group, the class centroid coordinates, and the sets of first and second generic values, creates a trained model that receives an instance in the class and outputs coordinates in the class coordinate system, and calculates, for a new instance classified into the class, values for the parameters for solving the new instance, based on first coordinates of the new instance obtained using the trained model, the set of first generic values, and the unit vectors.

FIG. 1

**Description**

FIELD

The embodiments discussed herein relate to a data processing method, a data processing apparatus, and a computer program.

BACKGROUND

An information processing apparatus may be used to solve combinatorial optimization problems. A combinatorial optimization problem is converted into an evaluation function that represents the energy of an Ising model. The Ising model is a model representing the behavior of spins of a magnetic material. The information processing apparatus searches for, among combinations of values of the state variables included in the evaluation function, a combination that minimizes or maximizes the evaluation function. The combination of values of the state variables that minimizes or maximizes the evaluation function corresponds to a ground state or an optimal solution, which is represented by a set of state variables. Examples of a solving method for obtaining an approximate solution to a combinatorial optimization problem within a practical time include a tabu search (TS) method, a simulated annealing (SA) method, and a parallel tempering (PT) method.

These solving methods use various parameters to control the solution search. For example, the TS method uses tabu tenure or the like as one of the parameters. The tabu tenure is the period of time during which the value of a state variable, once changed during the search, is fixed. In addition, for example, the SA method and the PT method use parameters related to temperature conditions such as a maximum temperature value and a minimum temperature value.

In order to obtain an output result predicted for input data, statistical analysis or a machine learning technique may be used. For example, a case-based learning apparatus has been proposed that uses arrangement case information of members on an existing substrate as an input, classifies the members arranged on the substrate based on their similarity on the basis of the arrangement case information, stores, for each classification, a design rule determined from the elements belonging to the classification, and outputs the design rules. The proposed case-based learning apparatus includes a neural network that uses the arrangement case information on the elements belonging to a classification as an input and extracts design rules for elements for which design rules are to be determined based on the arrangement case information.

In addition, a system has been proposed that constructs a client profile for detecting an incident of anomalous behavior according to a training corpus of events occurring on a client. Still further, a system has been proposed that generates machine learning models customized for healthcare facilities using synthetic datasets that expand training and testing datasets. Still further, a system has been proposed that generates a mask for object instances in an image using a neural network.

In this connection, a device has been proposed that performs parameter optimization on a neural network during model training, using functions called a cross entropy loss function and a triple loss function. See, for example, the following literatures.

Japanese Laid-open Patent Publication No. 11-306222
Japanese National Publication of International Patent Application No. 2022-512195
Japanese National Publication of International Patent Application No. 2023-544335
U.S. Patent Application Publication No. 2022/0092869
U.S. Patent Application Publication No. 20200/0364406

As described above, a plurality of parameters are used for solving combinatorial optimization problems. The value of each parameter affects the solving performance. For example, inappropriate values for the parameters may reduce the likelihood of reaching a better solution. Therefore, it is conceivable to classify a plurality of problem data sets representing a plurality of combinatorial optimization problems into a plurality of classes and to prepare a generic value for each parameter for each class in advance.

The generic value for each parameter may be obtained in advance through a parameter search. The parameter search is a process in which a plurality of problem data sets belonging to a class are solved in advance using various values for each parameter and, for example, the values of the parameters that best satisfy a predetermined criterion related to solving performance are selected as the generic values for the parameters for the class. When a new problem data set is generated, the problem data set may be solved using the generic values of the parameters corresponding to the class into which the new problem data set is classified.

In some cases, however, simply using the generic values of the parameters for the class, into which the problem data set is classified, does not achieve sufficiently high solving performance.

SUMMARY

In one aspect, it is desirable to obtain appropriate values for parameters.

According to one aspect, there is provided a data processing method executed by a data processing system, the data processing method including: acquiring a plurality of instances classified into a same class, a plurality of feature vectors corresponding to the plurality of instances, class centroid coordinates corresponding to the class, and a set of first generic values for a plurality of parameters, each of the instances being information indicating a problem to be solved, the class centroid coordinates being calculated from the plurality of feature vectors, the first generic values being obtained through a parameter search using a first instance group among the plurality of instances; determining a plurality of axial directions defining a class coordinate system having an origin corresponding to the class centroid coordinates, based on the plurality of feature vectors, extracting a plurality of second instance groups corresponding to the plurality of axial directions from the plurality of instances, based on the plurality of feature vectors and the plurality of axial directions, and obtaining, for each second instance group of the plurality of second instance groups, a set of second generic values for the plurality of parameters through the parameter search using said each second instance group; generating, for said each second instance group, a unit vector representing a correction direction with respect to the set of the first generic values, based on a first feature vector corresponding to said each second instance group, the class centroid coordinates, the set of the first generic values, and the set of the second generic values; creating a trained model using the plurality of instances and a plurality of coordinates corresponding to the plurality of feature vectors in the class coordinate system, the trained model being configured to receive an input of an instance belonging to the class and output coordinates corresponding to the instance in the class coordinate system; obtaining, upon receiving an input of a first instance classified into the class, first coordinates corresponding to the first instance in the class coordinate system using the first instance and the trained model; and calculating values for the plurality of parameters used for solving the first instance, based on the set of first generic values, unit vectors generated for the plurality of second instance groups, and the first coordinates.

BRIEF DESCRIPTION OF DRAWINGS

The invention is described, by way of example only, with reference to the following drawings, in which:

FIG. 1 is a view for describing a data processing system according to a first embodiment;
FIG. 2 illustrates an example of hardware of a data processing apparatus according to a second embodiment;
FIG. 3 illustrates an example of a distribution of instances in a feature space;
FIG. 4 illustrates an example of functions of the data processing apparatus;
FIGS. 5A and 5B illustrate examples of data held by the data processing apparatus;
FIG. 6 illustrates an example of functions of the data processing apparatus;
FIG. 7 illustrates displacement directions in a feature space;
FIG. 8 is a view for describing correction unit vectors;
FIG. 9 is a view for describing the definitions of variables;
FIG. 10 is a view for describing the definitions of variables;
FIG. 11 is a flowchart illustrating an example of a training process;
FIG. 12 is a continuation of the flowchart illustrating the example of the training process;
FIG. 13 is a flowchart illustrating an example of a sub-process for a class $c_m$;
FIG. 14 is a flowchart illustrating an example of a prediction process;
FIG. 15 is a flowchart illustrating an example of a classification process;
FIG. 16 is a flowchart illustrating an example of a feature regression process;
FIG. 17 is a flowchart illustrating an example of a generic parameter search;
FIG. 18 illustrates an example of tuning target parameters; and
FIGS. 19A and 19B are views for describing tuning target parameters.

DESCRIPTION OF EMBODIMENTS

Hereinafter, embodiments will be described with reference to the drawings.

[First Embodiment]

A first embodiment will be described.

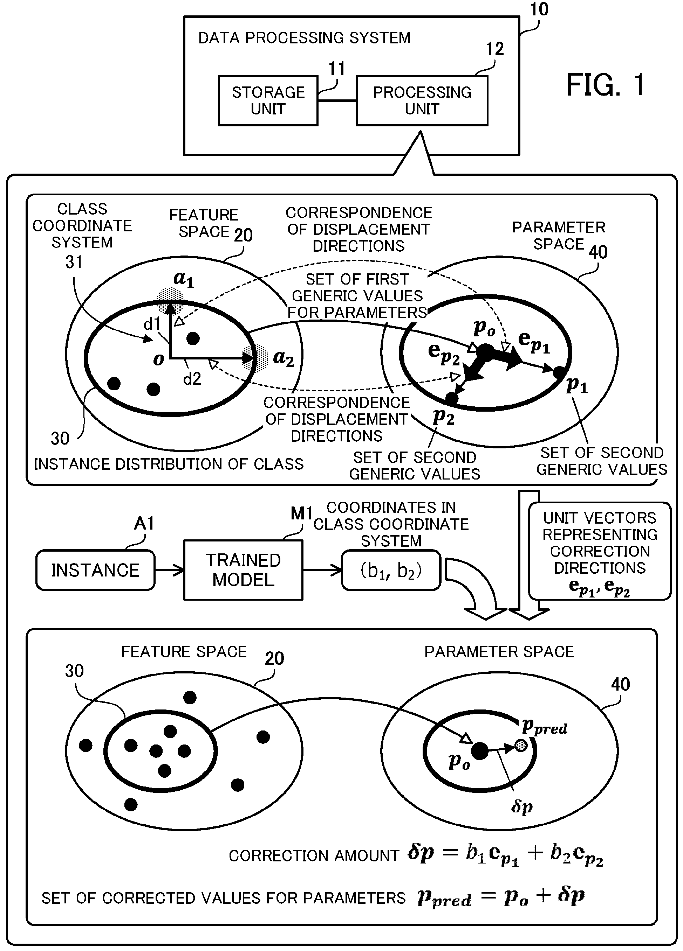

FIG. 1 is a view for describing a data processing system according to the first embodiment.
The data processing system 10 controls the values of parameters to be used for solving combinatorial optimization problems. The data processing system 10 includes a storage unit 11 and a processing unit 12.

The storage unit 11 may be a volatile semiconductor memory such as a random access memory (RAM) or a non-volatile storage device such as a hard disk drive (HDD) or a flash memory. The storage unit 11 stores data that is used by the processing unit 12 during processing. The processing unit 12 is, for example, a processor such as a central processing unit (CPU), a graphics processing unit (GPU), or a digital signal processor (DSP). However, the processing unit 12 may include a special-purpose electronic circuit such as an application specific integrated circuit (ASIC) or a field programmable gate array (FPGA). The processor executes a program stored in a memory (or the storage unit 11) such as a RAM. A set of a plurality of processors may be referred to as a "multiprocessor" or simply as a "processor".

A combinatorial optimization problem is formulated by a predetermined evaluation function, and is replaced with, for example, a problem of minimizing the value of the evaluation function. The value of the evaluation function, that is, the evaluation value represents, for example, the energy of an Ising model. The evaluation function may also be referred to as an energy function, an objective function, or another. The evaluation function includes a plurality of state variables. Each state variable is a binary variable that takes a value of 0 or 1. Each state variable may be referred to as a bit. A solution to the combinatorial optimization problem is represented by values of the plurality of state variables. A solution that minimizes the value of the evaluation function represents the ground state of the Ising model and corresponds to an optimal solution to the combinatorial optimization problem.

The Ising type evaluation function is defined as Equation (1).

$$E(\boldsymbol{x}) = \sum_{i=1}^{N}\sum_{j=1}^{N} W_{ij}x_i x_j + \sum_{i=1}^{N} b_i x_i \qquad (1)$$

The state vector x has a plurality of state variables as elements and represents a state of the Ising model. Equation (1) is an evaluation function formulated in a quadratic unconstrained binary optimization (QUBO) format. In the case of solving a problem that maximizes the value of the evaluation function, the signs of the evaluation function may be reversed.

The first term on the right-hand side of Equation (1) is the sum of the products of the values of two state variables and a weight coefficient over all possible pairs of state variables selectable from all state variables without omission or repetition. The subscripts i and j are the indices of the state variables. Here, $x_i$ denotes the i-th state variable, and $x_j$ denotes the j-th state variable. $W_{ij}$ is a weight coefficient that indicates the weight between the i-th state variable and the j-th state variable, or the intensity of coupling strength. Note that $W_{ij} = W_{ji}$ and $W_{ii} = 0$. N denotes the total number of state variables.

The second term on the right-hand side of Equation (1) is the sum of the products of the bias and value of each of all the state variables. Here, $b_i$ denotes the bias applied to the i-th state variable.

The combinatorial optimization problem is solved by a search unit, which is not illustrated. The search unit is implemented by a processor such as a CPU or a GPU. However, the processing unit 12 may be used to solve the problem. Examples of a method of solving combinatorial optimization problems include a TS method, an SA method, and a PT method.

The TS method is a search method based on greedy search. The greedy search is a method that iteratively performs a procedure in which an energy change $\Delta E_i$ is calculated for each of all state variables by changing its value in the current state, the state variable that results in the minimum $\Delta E_i$ is selected, and the value of the selected state variable is inverted to obtain the next state. By contrast, in the TS method, the value of a state variable, once changed, is fixed for a predetermined period of time. Among the state variables whose values are not fixed, the state variable that results in the minimum $\Delta E_i$ is selected, and the value of the state variable is updated. Thus, the TS method makes it possible to search a wide solution space while suppressing the repeated transitions to the same state, in cases where the search falls into a local solution, that is, a state in which all $\Delta E_i > 0$. In the TS method, the period of time during which the value of a state variable, once changed, is fixed is called tabu tenure. The tabu tenure is an example of a parameter used for problem solving in the TS method.

In addition, the SA method is a method that uses the Metropolis method or the Gibbs method to determine the transition probability of transitioning a certain state to the next state by changing a state variable. In the SA method, even a change that increases the value of the evaluation function may be stochastically allowed, based on a comparison between the change in the value of the evaluation function and a thermal noise value. This enables an escape from a local solution. The thermal noise value is generated based on a temperature value or a random number. A higher temperature value results in a greater amplitude of the thermal noise value. As the amplitude of the thermal noise value is greater, a state transition that involves a larger increase in the value of the evaluation function is more likely to be allowed. In the SA method, for example, the transition probability p from the current state to a next state candidate in the Metropolis method is expressed by Equation (2).

$$p = \min\left(1, \exp\left(-\frac{E_{prop} - E_{prev}}{T}\right)\right) \qquad (2)$$

$E_{prop}$ denotes the energy of the next state candidate.

$E_{prev}$ denotes the energy of the current state. T denotes a temperature value.

Further, in the PT method, a solution search using the Metropolis method is performed at a plurality of temperature values. In the PT method, an escape from a local solution is achieved by stochastically exchanging the states between adjacent temperatures at predetermined timing. Each execution unit of the search at a temperature value may be referred to as a replica. The PT method may be referred to as a replica exchange method. In the PT method, the probability p of exchanging the states between temperatures is expressed by Equation (3).

$$p = \min\left(1, \exp\left(-\Delta\right)\right) \qquad (3)$$

In Equation (3), $\Delta$ is defined by Equation (4).

$$\Delta = \left(\frac{1}{T_i} - \frac{1}{T_{i+1}}\right)(E_{i+1} - E_i) \qquad (4)$$

In Equation (4), i is an identification number identifying a temperature value. For the temperature value $T_{i+1}$ and the temperature value $T_i$, $T_{i+1} > T_i$ holds. $E_i$ denotes the energy of the state corresponding to the temperature value $T_i$. $E_{i+1}$ denotes the energy of the state corresponding to the temperature value $T_{i+1}$.

In the SA method, the amplitude of the thermal noise value is reduced by gradually changing the temperature value from a maximum temperature value to a minimum temperature value. As a result, the state of the Ising model converges to the ground state or a state close to the ground state, thereby yielding a solution. Further, in the PT method, a procedure is iterated in which a search is independently performed at each temperature value within a range from the minimum temperature value to the maximum temperature value, the states obtained at temperature values are exchanged at predetermined timing, and the searches are performed using the exchanged states as initial solutions. A good solution is extracted from the solutions obtained in the search process. The minimum temperature value, the maximum temperature value, the temperature variation range, and others are examples of parameters used for problem solving in the SA method and the PT method.

In addition to the above examples, other various parameters may be used for problem solving, such as a coefficient for determining the maximum number of iterations of state transition in a single search, and a threshold for the number of state transitions used to determine whether a solution has converged. A plurality of parameter values are used for problem solving.

The values of the parameters affect the solving performance. Therefore, the data processing system 10 controls the values of parameters used for solving each individual problem as follows.

The processing unit 12 acquires a plurality of instances classified into the same class, each instance being information indicating a problem to be solved. The instance is, for example, the data of $W_{ij}$ in Equation (1).

Here, with respect to an existing instance set, the processing unit 12 is able to cluster the instances included in the existing instance set in advance on the basis of the feature vectors of the instances to classify each instance into any of a plurality of classes. As a clustering method, for example, hierarchical density-based spatial clustering of applications with noise (HDBSCAN) or another may be used. The processing unit 12 is able to obtain a trained model that classifies each instance into any group, using the result of the clustering.

Each feature vector is a set of two or more types of features. One feature vector is obtained for one instance. The types of features may include, for example, the size of the instance, the density of the instance, the solving performance obtained when the parameters are set to trial values, and others. The size of the instance corresponds to the size of $W_{ij}$ in Equation (1). The density of the instance is an index indicating how many non-zero values are included in $W_{ij}$. The solving performance is, for example, the time taken to reach convergence of a solution or a result of determining whether the final solution energy is good or bad, in a search in which the parameters are set to trial values (default values). In addition, the features may include other indices such as the difficulty level of the problem, which is evaluated based on the types and number of constraint conditions.

FIG. 1 illustrates an instance distribution 30 of a certain class in a feature space 20. The number of dimensions of the feature space 20, that is, the number of types of features is two as an example. However, the number of dimensions of the feature space 20 may be larger than two. The position of an instance in the feature space 20 is represented by a feature vector of the instance.

The processing unit 12 acquires a plurality of feature vectors corresponding to a plurality of instances classified into the same class. For example, the plurality of instances are classified into the same class based on the similarity among the plurality of feature vectors corresponding to the plurality of instances. The processing unit 12 acquires class centroid coordinates corresponding to the class, calculated from the plurality of feature vectors. The class centroid coordinates correspond to the barycenter or geometric center of the plurality of feature vectors in the class. For example, the class centroid coordinates o in FIG. 1 are calculated as the arithmetic mean of each component of the feature vectors of the instances in the instance distribution 30.

The processing unit 12 acquires a set of first generic values for a plurality of parameters, the first generic values being obtained through a parameter search using a first instance group among the plurality of instances. The set of first generic values corresponds to the class. For example, the processing unit 12 may extract the first instance group of instances whose feature vectors are in the vicinity of the class centroid coordinates o from the plurality of instances belonging to the class. The processing unit 12 may perform the parameter search using the first instance group to obtain the set of first generic values for the plurality of parameters. Alternatively, the set of first generic values may be stored in the storage unit 11 in advance. In this case, the processing unit 12 is able to acquire the set of first generic values from the storage unit 11.

In the parameter search, a process of changing the value of each parameter and obtaining a solution using the values is iteratively performed, and a set of values (best parameter values) that best satisfies evaluation criteria such as a short solving time and a solution with a lower energy is obtained as generic values. Examples of a technique for determining a value for each parameter, which is used in the parameter search, include grid search, random search, and tree-structured parzen estimator (TPE).

In this connection, the first instance group may include some or all of the plurality of instances belonging to the class. For example, the first instance group may be randomly extracted from the plurality of instances belonging to the class. In FIG. 1, a parameter space 40 is illustrated as an example. In the example of FIG. 1, the number of dimensions of the parameter space 40, that is, the number of types of parameters is two or more. Coordinates $p_o$ in the parameter space 40 correspond to the set of first generic values of the plurality of parameters.

The processing unit 12 determines a plurality of axial directions that define a class coordinate system having its origin at the class centroid coordinates, based on the plurality of feature vectors belonging to the class. For example, a class coordinate system 31 is a class coordinate system corresponding to the instance distribution 30. The origin of the class coordinate system 31 corresponds to the class centroid coordinates o in the feature space 20.

In one example, the processing unit 12 performs principal component analysis (PCA) on the instance distribution 30 to obtain two principal component directions of the instance distribution 30 as the axial directions d1 and d2 of the class coordinate system 31. Unit vectors that represent the principal component directions of the instance distribution 30 are calculated as the eigenvectors of the covariance matrix based on the feature vectors of the individual instances of the instance distribution 30 and the class centroid coordinates o. These eigenvectors of the covariance matrix are referred to as a first principal component, a second principal component, and ... in descending order of the eigenvalues. In the example of FIG. 1, the feature space 20 is two-dimensional. Therefore, the processing unit 12 obtains two principal component directions (a first principal component direction and a second principal component direction). The axial directions of the class coordinate system 31 may be obtained using another technique such as singular value decomposition (SVD).

The processing unit 12 extracts a plurality of second instance groups corresponding to the plurality of axial directions from the plurality of instances, based on the plurality of feature vectors and the plurality of axial directions. For example, the processing unit 12 obtains the coordinates of ends of the instance distribution 30 corresponding respectively to the axial directions d1 and d2 of the class coordinate system 31 in the feature space 20. Coordinates $a_1$ and $a_2$ are the coordinates of the ends corresponding to the two axial directions d1 and d2 in the instance distribution 30, respectively. For example, the processing unit 12 may calculate the coordinates $a_1$ based on an eigenvector ($h_1$) and its corresponding eigenvalue ($\lambda_1$) of the covariance matrix that indicate the principal component corresponding to the axial direction d1. For example, the coordinates $a_1$ may be calculated as $a_1 = o + \alpha * \lambda_1 * h_1$, where $\alpha$ is a positive constant commonly used in the axial directions. The coordinates $a_2$ may be calculated in the same manner.

The processing unit 12 obtains one or more instances that fall in the range of a predetermined distance from the coordinates $a_1$, as a first second instance group. Likewise, the processing unit 12 obtains one or more instances that fall in the range of a predetermined distance from the coordinates $a_2$, as a second second instance group. It may be said that a vector representing the coordinates $a_1$ is a feature vector corresponding to the first second instance group. Similarly, it may be said that a vector representing the coordinates $a_2$ is a feature vector corresponding to the second second instance group.

The processing unit 12 performs a parameter search using each of the plurality of second instance groups to obtain, for each second instance group, a set of second generic values for the plurality of parameters. For example,

coordinates $p_1$ in the parameter space 40 correspond to the set of second generic values of the plurality of parameters corresponding to the first second instance group. Coordinates $p_2$ in the parameter space 40 correspond to the set of second generic values of the plurality of parameters corresponding to the second second instance group.

Further, the processing unit 12 acquires a first feature vector corresponding to each second instance group. As described above, the vector corresponding to the coordinates $a_1$ in the feature space is the first feature vector corresponding to the first second instance group. Likewise, the vector corresponding to the coordinates $a_2$ in the feature space is the first feature vector corresponding to the second second instance group.

The processing unit 12 generates, for each second instance group, a unit vector representing a correction direction for the set of first generic values, based on the first feature vector, the class centroid coordinates, the set of first generic values, and the set of second generic values. Here, the components of the coordinates of an instance in the class coordinate system 31 are respectively associated with unit vectors $e_{p\_1}$ and $e_{p\_2}$ representing the displacement directions of the sets of second generic values $p_1$ and $p_2$ with respect to the set of first generic values $p_o$ in the parameter space 40. The processing unit 12 calculates, for example, the unit vectors $e_{p\_1}$ and $e_{p\_2}$ using Equations (5) and (6). The subscript "p_i" indicates "$p_i$".

$$e_{p1} = \frac{p_1 - p_o}{|a_1 - o|} \qquad (5)$$

$$e_{p2} = \frac{p_2 - p_o}{|a_2 - o|} \qquad (6)$$

The unit vector $e_{p\_1}$ represents the correction direction for $p_o$ corresponding to the first component of the coordinates of an instance in the class coordinate system 31. The unit vector $e_{p\_2}$ represents the correction direction for $p_o$ corresponding to the second component of the coordinates of an instance in the class coordinate system 31. The number of unit vectors is the same as the number of dimensions of the feature space 20. The processing unit 12 stores the generated unit vectors $e_{p\_1}$ and $e_{p\_2}$ in the storage unit 11 in association with the class.

Further, the processing unit 12 creates a trained model that receives an instance belonging to a class as an input and outputs the coordinates corresponding to the instance in the class coordinate system, using a plurality of instances and a plurality of coordinates corresponding to a plurality of feature vectors in the class coordinate system. For input to the trained model, the processing unit 12 converts each feature vector of the instances belonging to the class into coordinates in the class coordinate system of the class.

For example, a trained model M1 is a model that receives an instance belonging to the class corresponding to the class centroid coordinates o as an input and outputs the coordinates corresponding to the instance in the class coordinate system 31. The processing unit 12 creates the trained model M1 using a machine learning technique. The trained model M1 may be a neural network (NN). For example, in the case where the trained model M1 is a graph neural network (GNN), graph-structured data obtained from $W_{ij}$ corresponding to an instance is input to the trained model M1. The instance may be data converted into a format suitable for input into the trained model. The processing unit 12 stores the created trained model M1 in the storage unit 11 in association with the class.

In the manner described above, the processing unit 12 prepares the trained model M1 and the unit vectors $e_{p\_1}$ and $e_{p\_2}$ for each class in advance. When the processing unit 12 receives a new instance belonging to a certain class, the processing unit 12 determines the values of the plurality of parameters used for solving the instance as follows, based on the trained model M1 and the unit vectors $e_{p\_1}$ and $e_{p\_2}$ corresponding to the class.

The processing unit 12 acquires an instance A1 that is classified into the class corresponding to the class centroid coordinates o. Then, the processing unit 12 inputs the instance A1 to the trained model M1 corresponding to the class to thereby obtain the coordinates $(b_1, b_2)$ of the instance A1 in the class coordinate system 31.

The processing unit 12 calculates a set of values $p_{pred}$ for the plurality of parameters used for solving the instance A1, based on the set of first generic values $p_o$ corresponding to the class, the unit vectors $e_{p\_1}$ and $e_{p\_2}$ corresponding to the class, and the coordinates $(b_1, b_2)$.

Specifically, the processing unit 12 calculates a correction amount $\delta p$. Here, $\delta p = b_1 e_{p\_1} + b_2 e_{p\_2}$. The processing unit 12 calculates $p_{pred}$ by correcting $p_o$ using $\delta p$. That is, $P_{pred} = p_o + \delta p$.

The processing unit 12 outputs $p_{pred}$. For example, the processing unit 12 may output the instance A1 and $p_{pred}$ to the search unit, and cause the search unit to search for a solution.

Note that, in the data processing system 10, the apparatus that creates the trained model M1 and the unit vectors $e_{p\_1}$ and $e_{p\_2}$ may be the same as or different from the apparatus that calculates $p_{pred}$ using the trained model M1 and the unit vectors $e_{p\_1}$ and $e_{p\_2}$. Alternatively, the functions of the data processing system 10 may be implemented by a single apparatus, that is, a data processing apparatus.

According to the data processing system 10 of the first embodiment, a plurality of instances, each of which is information indicating a problem to be solved and which are classified into the same class, are acquired. A plurality of feature vectors corresponding to the plurality of instances are obtained. Class centroid coordinates corresponding to the class are calculated from the plurality of feature vectors. A set of first generic values for a plurality of parameters is obtained through a parameter search using a first instance group among the plurality of instances. A plurality of axial directions that define a class coordinate system having its origin at the class centroid coordinates are determined based on the plurality of feature vectors. Based on the plurality of feature vectors and the plurality of axial directions, a plurality of second instance groups corresponding respectively to the plurality of axial directions are extracted from the plurality of instances. For each of the plurality of second instance groups, a set of second generic values for the plurality of parameters is obtained through a parameter search using the second instance group. A trained model that receives an instance belonging to the class as an input and outputs the coordinates corresponding to the instance in the class coordinate system is created using the plurality of instances and the plurality of coordinates corresponding to the plurality of feature vectors in the class coordinate system. For each second instance group, a unit vector representing a correction direction for the set of first generic values is generated based on the first feature vector corresponding to the second instance group, the class centroid coordinates, the set of the first generic values, and the set of the second generic values. When a first instance classified into the class is input, first coordinates corresponding to the first instance in the class coordinate system are obtained using the first instance and the trained model. Based on the set of first generic values, the unit vectors, and the first coordinates, the values of the plurality of parameters used for solving the first instance are calculated.

Accordingly, the data processing system 10 is able to obtain, for an individual instance, an appropriate value for each of the plurality of parameters used for solving the instance. Specifically, by correcting, for an individual instance belonging to a certain class, the generic values for the parameters corresponding to the class on the basis of the feature vector of the instance, the data processing system 10 is able to obtain more appropriate values for the parameters than the generic values. By using the corrected values for the parameters in solving the instance, the data processing system 10 is able to improve the solving performance, compared to the case of using the generic values for the parameters.

In addition, for example, in the case where a user wants to solve the instance A1, the data processing system 10 inputs information on the instance A1 to the trained model M1 to predict the coordinates $(b_1, b_2)$, which makes it possible to obtain $p_{pred}$ through relatively simple calculation. Thus, the data processing system 10 is able to obtain the values of the plurality of parameters used for the problem solving at high speed.

Here, the data processing system 10 does not directly regress the value of each parameter in response to an instance, but regresses the coordinates in the class coordinate system in the feature space (i.e., the feature vector converted into the class coordinate system) in response to the instance. The reason is as follows.

For example, in the case of creating a trained model that directly regresses the value of each parameter, the values of the parameters corresponding to each existing instance are obtained through a parameter search and are input to the trained model, in order to create the trained model. However, the parameter search for each existing instance is very time-consuming. In addition, as dimensions for prediction, the number of dimensions K of the feature space is usually smaller than the number of dimensions L of the parameter space. In one example, K = 3 and L = 10. Therefore, by using the coordinates (the number of dimensions K) in the class coordinate system in the feature space as the regression value of the trained model, the data processing system 10 is able to achieve speed-up of the training process and prediction process, compared to the case of directly regressing the value of each parameter.

[Second Embodiment]

Next, a second embodiment will be described.

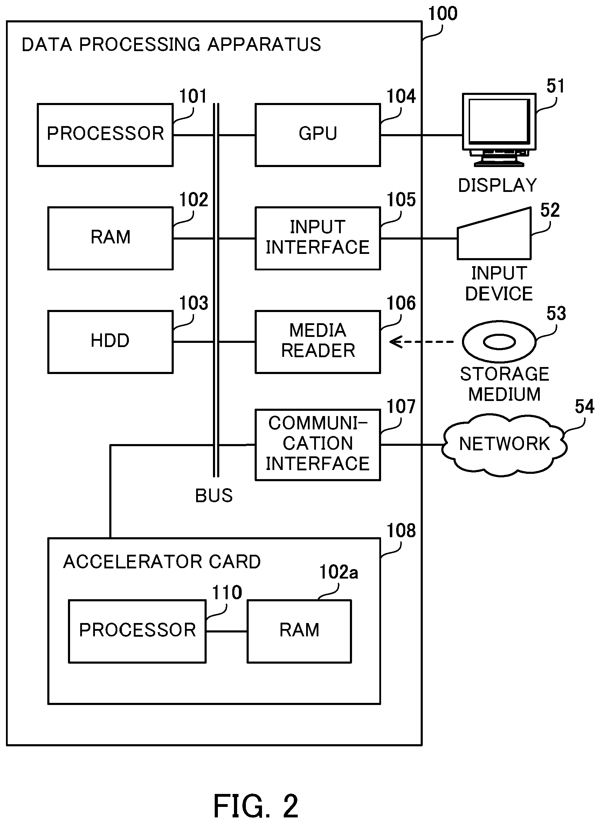

FIG. 2 illustrates an example of hardware of a data processing apparatus according to the second embodiment.

A data processing apparatus 100 searches for solutions to combinatorial optimization problems using the TS method, the SA method, the PT method, or the like, and outputs the found solutions. A combinatorial optimization problem is formulated by the evaluation function E(x) of Equation (1), and is replaced with, for example, a problem of minimizing the value of the evaluation function E(x). In problem solving using the TS method, the SA method, the PT method or another method, a plurality of parameters are used as described above.

The data processing apparatus 100 includes a processor 101, a RAM 102, an HDD 103, a GPU 104, an input interface 105, a media reader 106, a communication interface 107, and an accelerator card 108. These units included in the data processing apparatus 100 are connected to a bus inside the data processing apparatus 100. The processor 101 corresponds to the processing unit 12 of the first embodiment. The RAM 102 corresponds to the storage unit 11 of the first embodiment.

The processor 101 is an arithmetic device that executes program instructions. The processor 101 is, for example, a CPU. The processor 101 loads at least part of a program and data stored in the HDD 103 into the RAM 102 and executes the program. The processor 101 may include a plurality of processor cores. The data processing apparatus 100 may include a plurality of processors. The processes described below may be performed in parallel using a plurality of processors or processor cores. A set of a plurality of processors may be referred to as a "multiprocessor" or simply as a "processor". The processor may be referred to as "processor circuitry". A plurality of processes performed by the data processing apparatus 100 may be performed by different processors, or at least some of the plurality of processes may be performed by the same processor.

The RAM 102 is a volatile semiconductor memory that temporarily stores programs to be executed by the processor 101 and data to be used by the processor 101 during processing. The data processing apparatus 100 may include a memory of a type other than RAM, or may include a plurality of memories.

The HDD 103 is a non-volatile storage device that stores software programs such as an operating system (OS), middleware, and application software, and data. The data processing apparatus 100 may include another type of storage device such as a flash memory or a solid state drive (SSD), or may include a plurality of non-volatile storage devices.

The GPU 104 outputs images to a display 51 connected to the data processing apparatus 100 in accordance with instructions from the processor 101. The display 51 may be any type of display such as a cathode ray tube (CRT) display, a liquid crystal display (LCD), a plasma display, or an organic electro-luminescence (OEL) display.

The input interface 105 receives input signals from an input device 52 connected to the data processing apparatus 100 and outputs the input signals to the processor 101. As the input device 52, a pointing device such as a mouse, a touch panel, a touch pad, or a trackball, a keyboard, a remote controller, a button switch, or the like may be used. A plurality of types of input devices may be connected to the data processing apparatus 100.

The media reader 106 is a reading device that reads programs and data stored in a storage medium 53. As the storage medium 53, for example, a magnetic disk, an optical disc, a magneto-optical disk (MO), a semiconductor memory, or the like may be used. Magnetic disks include a flexible disk (FD) and an HDD. Optical discs include a compact disc (CD) and a digital versatile disc (DVD).

For example, the media reader 106 copies a program or data from the storage medium 53 to another storage medium such as the RAM 102 or the HDD 103. The read program is executed by, for example, the processor 101. The storage medium 53 may be a portable storage medium, and may be used to distribute programs and data. The storage medium 53 and the HDD 103 may be referred to as computer-readable storage media.

The communication interface 107 is connected to a network 54 and communicates with other information processing apparatuses via the network 54. The communication interface 107 may be a wired communication interface connected to a wired communication device such as a switch or a router, or may be a wireless communication interface connected to a wireless communication device such as a base station or an access point.

The accelerator card 108 is a hardware accelerator that searches for solutions to combinatorial optimization problems. The accelerator card 108 includes a processor 110 and a RAM 102a. The processor 110 searches for the solutions using the TS method, the SA method, the PT method, or the like. The processor 110 is, for example, a GPU, a DSP, an ASIC, or an FPGA. The RAM 102a stores data used by the processor 110 during processing.

The RAM may be a dynamic random access memory (DRAM) or a static random access memory (SRAM).

Here, a combinatorial optimization problem is characterized by instances that are information indicating QUBO of Equation (1). The plurality of instances are clustered based on the feature vectors of the instances. Each feature vector has a plurality of features as components. Examples of the types of the features include the size and density of an instance, the solving performance obtained when parameters are set to trial values (default values), the difficulty evaluated based on the types and number of constraint conditions, and others.

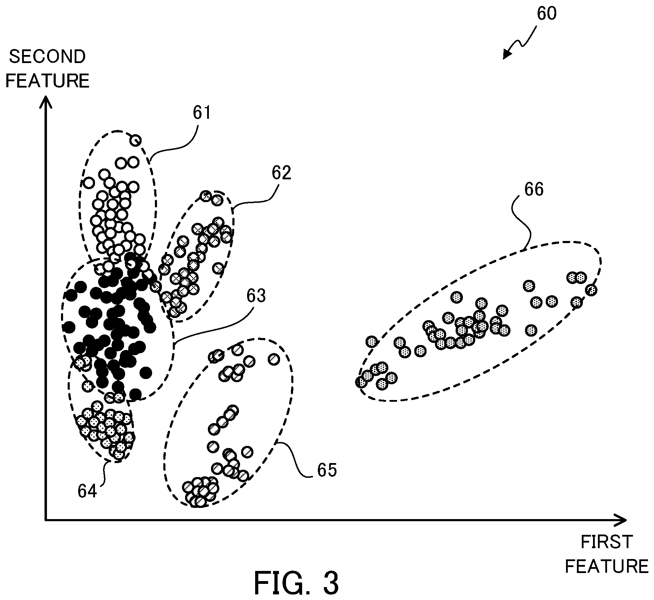

FIG. 3 illustrates an example of a distribution of instances in a feature space.

A feature space 60 is a two-dimensional feature space in which the horizontal axis represents a first feature and the vertical axis represents a second feature. The feature space may have dimensionality higher than two. A vector representing one point plotted in the feature space 60 is a feature vector corresponding to one instance. The points in the feature space 60 form the distribution of all instances in the feature space 60. Each instance is clustered based on the feature vector and classified into one of a plurality of classes. For example, HDBSCAN is used as a clustering method. Alternatively, the clustering may be performed by a relatively simple method such as the identity of users, the identity of problem types, or which region an instance belongs to among a plurality of regions obtained by dividing the feature space 60. By the clustering, instances having similar feature values are classified into the same class.

In the example of the feature space 60, each instance is classified into one of six classes. The six sub-distributions 61, 62, 63, 64, 65, 66 of instances correspond to the six classes. One sub-distribution is the instance distribution of a corresponding class. The geometric center of each sub-distribution corresponds to the class centroid coordinates of the class. For example, the class centroid coordinates of a certain class are calculated as an arithmetic mean of the feature vectors belonging to the class.

The data processing apparatus 100 holds, for each class, a set of generic values for parameters used for problem solving, which are obtained through a parameter search. The data processing apparatus 100 provides a function of correcting, before solving an individual instance, a set of generic values for the parameters corresponding to the class to which the instance belongs, according to the instance.

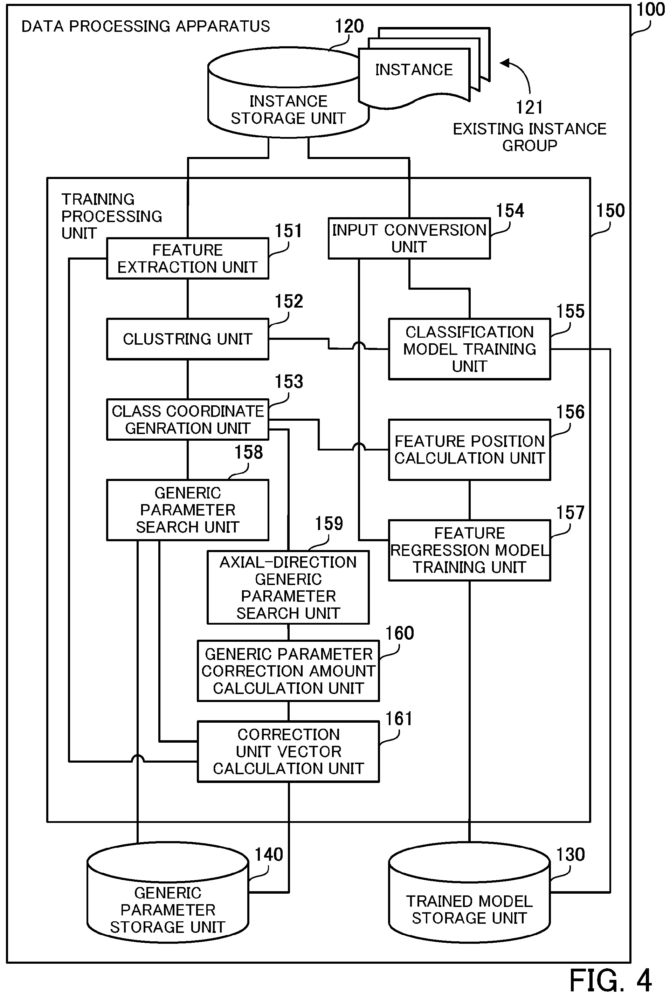

FIG. 4 illustrates an example of functions of the data processing apparatus.

The data processing apparatus 100 includes an instance storage unit 120, a trained model storage unit 130, a generic parameter storage unit 140, and a training processing unit 150. The storage spaces of the RAM 102 and the HDD 103 are used for the instance storage unit 120, the trained model storage unit 130, and the generic parameter storage unit 140. The training processing unit 150 is implemented by the processor 101 executing a program stored in the RAM 102.

The instance storage unit 120 stores an existing instance group 121. The existing instance group 121 is, for example, a set of instances created in the past.

The trained model storage unit 130 stores trained models created by the training processing unit 150 using a machine learning technique. The trained models include a trained classification model and trained feature regression models. The trained classification model is a model that receives an instance as an input and outputs a class to which the instance is classified. Each trained feature regression model is a model that receives an instance as an input and outputs the coordinates corresponding to the instance in a class coordinate system. A class coordinate system is defined for each class. One trained feature regression model is created for each class. The trained classification model and the trained feature regression models are, for example, GNNs.

The generic parameter storage unit 140 stores, for each class, a set of generic values for parameters used for problem solving. In addition, the generic parameter storage unit 140 stores, for each class, unit vectors representing correction directions in a parameter space, for correcting the set of generic values for an individual instance. The unit vectors are referred to as correction unit vectors.

Hereinafter, a set of generic values $p_o = (p_{o1}, p_{o2}, ..., p_{oL})$ for parameters corresponding to a class with class centroid coordinates o in the feature space is referred to as a generic parameter $p_o$. The number of dimensions L of the generic parameter $p_o$ corresponds to the number of types of parameters.

The training processing unit 150 creates a trained classification model, trained feature regression models, and correction unit vectors. The training processing unit 150 includes a feature extraction unit 151, a clustering unit 152, a class coordinate generation unit 153, an input conversion unit 154, a classification model training unit 155, a feature position calculation unit 156, a feature regression model training unit 157, a generic parameter search unit 158, an axial-direction generic parameter search unit 159, a generic parameter correction amount calculation unit 160, and a correction unit vector calculation unit 161.

The feature extraction unit 151 extracts a feature of each instance of the existing instance group 121 for each feature type, and generates the feature vector of each instance.

The clustering unit 152 clusters instances based on the feature vectors of the instances. By the clustering, the instances of the existing instance group 121 are classified into a plurality of classes. The class centroid coordinates of a certain class correspond to the geometric center of the feature vectors of the instances belonging to the class.

The class coordinate generation unit 153 generates a class coordinate system for each class based on the instance distribution of the class in the feature space. The origin of the class coordinate system corresponds to the class centroid coordinates of the class. For example, the class coordinate generation unit 153 performs PCA on the instance distribution in the feature space to obtain unit vectors representing principal component directions of the instance distribution, and determines the principal component directions as the axial directions of the class coordinate system. The class coordinate generation unit 153 may determine the axial directions of the class coordinate system using another method such as SVD.

The input conversion unit 154 converts each instance of the existing instance group 121 for input to a trained model. For example, when the trained model is a GNN, each instance is converted into graph data. The graph data obtained by converting the instance represents $W_{ij}$ as a graph structure with nodes and edges connecting the nodes.

The classification model training unit 155 creates a trained classification model by performing machine learning using the classification result of the instances obtained by the clustering unit 152 and the converted data of the instances obtained by the input conversion unit 154. The trained classification model is a model that receives an instance as an input and outputs a class to which the instance is classified. The classification model training unit 155 stores the trained classification model in the trained model storage unit 130.

The feature position calculation unit 156 converts the feature vector of each instance into coordinates in the class coordinate system of the class to which the instance belongs.

The feature regression model training unit 157 creates a trained feature regression model for each class by performing machine learning using the coordinates of the instances in the class coordinate system and the converted data of the instances obtained by the input conversion unit 154. The feature regression model training unit 157 stores the created trained feature regression model for each class in the trained model storage unit 130.

The generic parameter search unit 158 determines an instance group having the feature vectors belonging to a region within a predetermined range from the class centroid coordinates of a class in the feature space. The predetermined range is, for example, a region within a certain distance from the class centroid coordinates. The distance is predetermined by the user. The generic parameter search unit 158 searches for a generic parameter for each class through a parameter search using the determined instance group. As a technique for the parameter search, grid search, random search, TPE, or another is used. The details of the parameter search will be described later. The generic parameter search unit 158 stores the generic parameter for each class in the generic parameter storage unit 140.

The axial-direction generic parameter search unit 159 obtains, for the instance distribution of each class, the coordinates of ends of the instance distribution in the feature space. The coordinates of an end of the instance distribution for a certain class are referred to as "cluster end coordinates" of the class. For example, the axial-direction generic parameter search unit 159 detects a region corresponding to an instance distribution in the feature space, and obtains, as the cluster end coordinates, the coordinates of a boundary between the inside and the outside of the region reached by tracing in an axial direction (principal component direction) of the class coordinate system from the class centroid coordinates as a starting point. The cluster end coordinates are obtained for each individual principal component direction of the instance distribution.

The axial-direction generic parameter search unit 159 determines an instance group having the feature vectors belonging to a region within a predetermined range from the cluster end coordinates of the corresponding class in the feature space. The predetermined range is, for example, a region within a certain distance from the cluster end coordinates. The distance is predetermined by the user. Here, the cluster end coordinates are coordinates in the feature space, and the components thereof are various features. Therefore, it may be said that the cluster end coordinates are a feature vector corresponding to the instance group.

Then, the axial-direction generic parameter search unit 159 searches for a generic parameter corresponding to the instance group determined for the cluster end coordinates, through a parameter search using the instance group. For each class, the axial-direction generic parameter search unit 159 searches for the generic parameter for each of the cluster end coordinates. That is, the axial-direction generic parameter search unit 159 obtains a generic parameter for each axial direction of the class coordinate system for a certain class.

The generic parameter correction amount calculation unit 160 calculates, for each class, the difference between the generic parameter found by the generic parameter search unit 158 and the generic parameter for each axial direction found by the axial-direction generic parameter search unit 159.

The correction unit vector calculation unit 161 calculates, for each class, correction unit vectors used for correcting the generic parameter. A correction unit vector e for the generic parameter corresponding to a certain axial component of the coordinates in the class coordinate system is expressed as $e = \Delta p/|a-o|$, where $\Delta p$ denotes the difference with respect to the generic parameter corresponding to the certain axial direction, calculated by the generic parameter correction amount calculation unit 160, a denotes the cluster end coordinates corresponding to the axial direction in the feature space, and o denotes the class centroid coordinate. For example, in the case where the feature vector is two-dimensional, the correction unit vectors are obtained by Equations (5) and (6). The correction unit vector calculation unit 161 stores the correction unit vectors e in association with the corresponding class in the generic parameter storage unit 140.

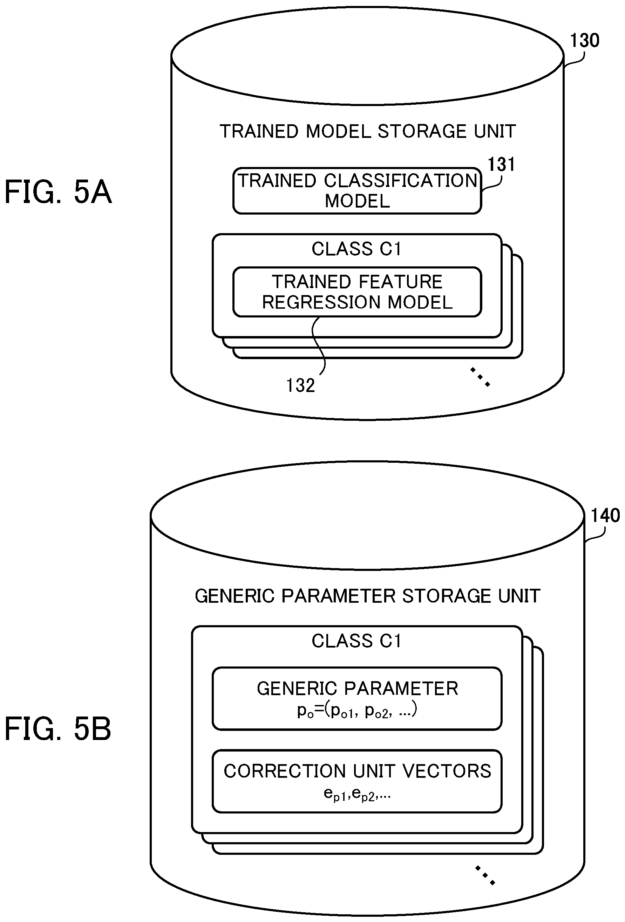

FIGS. 5A and 5B illustrate examples of data held by the data processing apparatus.

FIG. 5A illustrates data stored in the trained model storage unit 130. The trained model storage unit 130 stores the trained classification model 131 created by the classification model training unit 155. In addition, the trained model storage unit 130 stores each trained feature regression model 132 created by the feature regression model training unit 157 in association with the identification information of the corresponding class. The "class C1" is an example of identification information of a class.

FIG. 5B illustrates data stored in the generic parameter storage unit 140. The generic parameter storage unit 140 stores a generic parameter and correction unit vectors in association with the identification information of the corresponding class. As described above, the number of dimensions of the generic parameter $p_o = (p_{o1}, p_{o2}, ...)$ is L. The number of dimensions of the feature vector corresponds to the number of correction unit vectors $e_{p\_1}, e_{p\_2}, ...$ for each class. Here, the subscripts $p\_1, p\_2, ... (= p_1, p_2, ...)$ of e identify the generic parameters obtained for the cluster end coordinates $a_1, a_2, ...$ of the corresponding class in the feature space by the axial-direction generic parameter search unit 159.

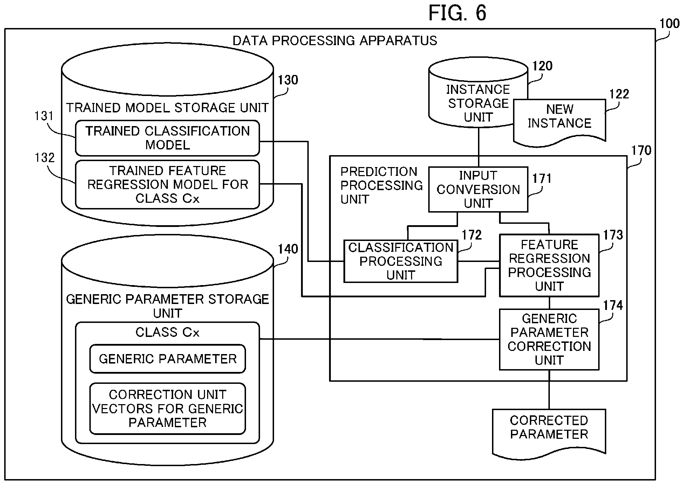

FIG. 6 illustrates an example of functions of the data processing apparatus.

The data processing apparatus 100 includes a prediction processing unit 170. The prediction processing unit 170 is implemented by the processor 101 executing a program stored in the RAM 102. The prediction processing unit 170 predicts and outputs a set of values for parameters to be used for solving a new instance 122 acquired from the instance storage unit 120. The prediction processing unit 170 includes an input conversion unit 171, a classification processing unit 172, a feature regression processing unit 173, and a generic parameter correction unit 174.

The input conversion unit 171 converts the new instance 122 for input to a trained model. For example, in the case where the trained model is a GNN, each instance is converted into graph data.

The classification processing unit 172 inputs the converted data of the new instance 122 obtained by the input conversion unit 171, into the trained classification model 131 stored in the trained model storage unit 130 to thereby obtain a class to which the new instance 122 is classified. Here, the class to which the new instance 122 is classified is denoted as a class Cx.

The feature regression processing unit 173 identifies the trained feature regression model 132 of the class Cx stored in the trained model storage unit 130. The feature regression processing unit 173 performs a regression process by inputting the converted data of the new instance 122 obtained by the input conversion unit 171 into the trained feature regression model 132. Specifically, the feature regression processing unit 173 obtains the coordinates corresponding to the new instance 122 in the class coordinate system of the class Cx as an output of the trained feature regression model 132.

The generic parameter correction unit 174 acquires the generic parameter of the class Cx and the correction unit vectors for the generic parameter from the generic parameter storage unit 140. The generic parameter correction unit 174 corrects the generic parameter based on the coordinates obtained by the feature regression processing unit 173, the generic parameter, and the correction unit vectors to calculate a set of values for the parameters (corrected parameter) to be used for solving the new instance 122.

Here, the number of dimensions of a feature vector is denoted by K. A correction amount $\delta p = b_1 e_{p\_1} + b_2 e_{p\_2} + ... + b_k e_{p\_K}$ is obtained, where $b = (b_1, b_2, ..., b_k)$ are the coordinates of the new instance 122 in the class coordinate system and $e_{p\_1}, e_{p\_2}, ..., e_{p\_K}$, denote the correction unit vectors. A corrected parameter p' for the generic parameter $p_o$ is obtained as $p' = p_o + \delta p$.

The generic parameter correction unit 174 outputs the corrected parameter. For example, the generic parameter correction unit 174 may input the corrected parameter to the accelerator card 108 together with the new instance 122 and cause the accelerator card 108 to search for a solution to the new instance 122. The generic parameter correction unit 174 may display the corrected parameter on the display 51 or transmit the corrected parameter to another apparatus via the network 54.

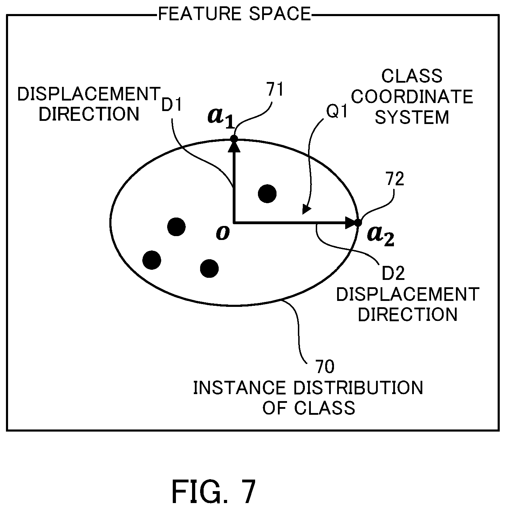

FIG. 7 illustrates displacement directions in the feature space.

For example, a two-dimensional class coordinate system Q1 is determined for an instance distribution 70 of a certain class in a two-dimensional feature space. The origin of the class coordinate system Q1 corresponds to the class centroid coordinates o in the feature space. Two axial directions of the class coordinate system Q1 are, for example, two principal component directions of the instance distribution 70. These two principal components are each obtained as an eigenvector and an eigenvalue of a covariance matrix based on the feature vectors of the instance distribution 70.

The two axial directions of the class coordinate system Q1 correspond to displacement directions D1 and D2 of the feature vectors of instances with respect to the class centroid coordinates o. The displacement directions D1 and D2 in the feature space are each converted into the components of coordinates of the class coordinate system Q1.

Here, it may also be said that the elliptical region surrounding the instance distribution 70 illustrated in FIG. 7 is a region covering the points indicated by the feature vectors of the instances included in the instance distribution 70. When viewed from the class centroid coordinates o, the boundary point between the inside and the outside of the region in the displacement direction D1 is an end 71 of the region. When viewed from the class centroid coordinates o, the boundary point between the inside and the outside of the region in the displacement direction D2 is an end 72 of the region. The ends 71 and 72 correspond to the cluster ends of the class. Here, the coordinates (cluster end coordinates) of the ends 71 and 72, that is, the cluster ends 71 and 72 in the feature space are $a_1$ and $a_2$, respectively. The coordinates $a_1$ and $a_2$ represent points in the feature space. Therefore, the position vectors corresponding to the coordinates $a_1$ and $a_2$ may be said to be feature vectors.

In this connection, the coordinates $a_1$ and $a_2$ may be obtained as follows. For example, the coordinates $a_1$ may be obtained by calculating the product of an eigenvector and its corresponding eigenvalue, which indicate the principal component corresponding to the displacement direction D1, multiplying the product by a positive constant $\alpha$, and adding the vector obtained by the multiplication to the class centroid coordinates o. Similarly, the coordinates $a_2$ may be obtained by calculating the product of an eigenvector and its corresponding eigenvalue, which indicate the principal component corresponding to the displacement direction D2, multiplying the product by the positive constant $\alpha$, and adding the vector obtained by the multiplication to the class centroid coordinates o.

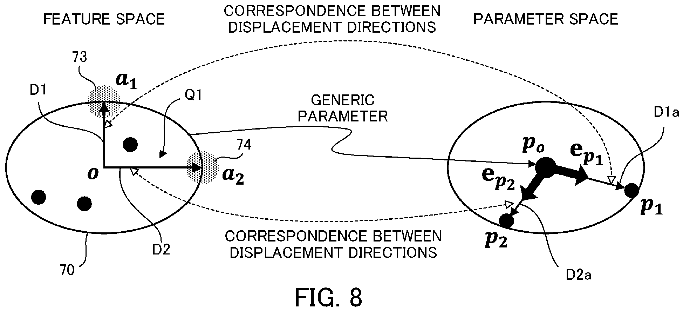

FIG. 8 is a view for describing correction unit vectors.

For example, the generic parameter search unit 158 obtains the generic parameter $p_o$ corresponding to a class through a parameter search using a plurality of existing instances corresponding to the instance distribution 70. The generic parameter search unit 158 may obtain the generic parameter $p_o$ through a parameter search using an instance group having the feature vectors belonging to a region within a predetermined range from the class centroid coordinates o.

In addition, the axial-direction generic parameter search unit 159 extracts an instance group having the feature vectors belonging to a region 73 within a predetermined range centered on the coordinates $a_1$ among the instances corresponding to the instance distribution 70. The axial-direction generic parameter search unit 159 obtains the generic parameter $p_1$ through a parameter search using the extracted instance group.

The displacement direction D1a in the parameter space, indicated by the difference between the generic parameter $p_1$ and the generic parameter $p_o$, is associated with a component of the class coordinate system Q1 corresponding to the displacement direction D1 in the feature space. The unit vector representing the displacement direction D1a, that is, the correction unit vector $e_{p\_1}$ is expressed by Equation (5).

In addition, the axial-direction generic parameter search unit 159 extracts an instance group having the feature vectors belonging to a region 74 within a predetermined range centered on the coordinates $a_2$ among the instances

corresponding to the instance distribution 70. The axial-direction generic parameter search unit 159 obtains the generic parameter $p_2$ through a parameter search using the extracted instance group.

The displacement direction D2a in the parameter space, indicated by the difference between the generic parameter $p_2$ and the generic parameter $p_o$, is associated with a component of the class coordinate system Q1 corresponding to the displacement direction D2 in the feature space. The unit vector representing the displacement direction D2a, that is, the correction unit vector $e_{p\_2}$ is expressed by Equation (6).

Next, the definitions of variables used in the following description will be described.

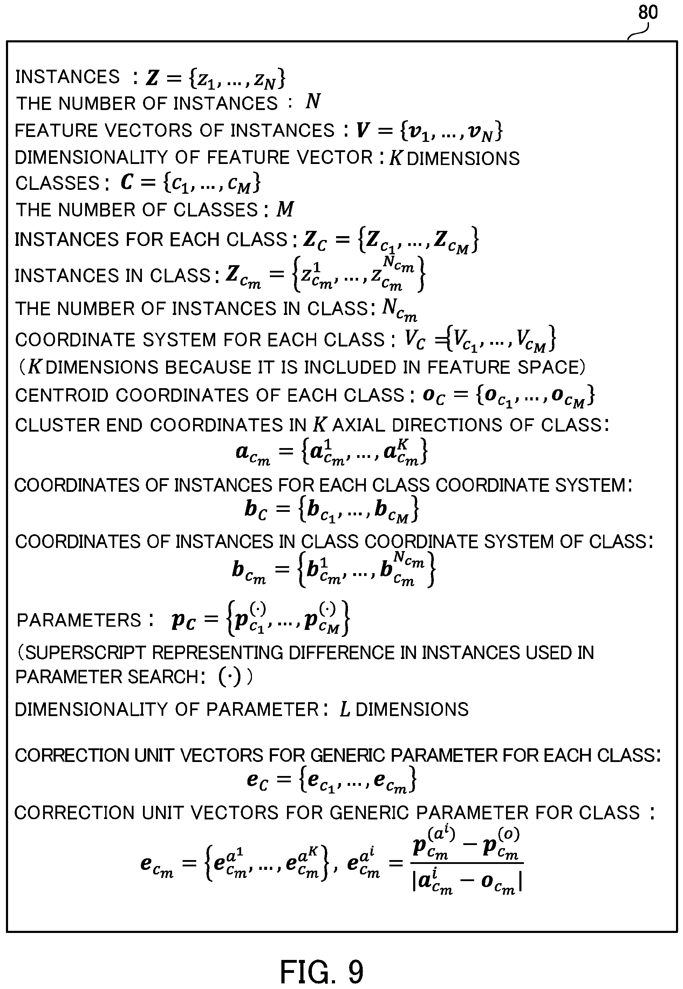

FIG. 9 is a view for describing the definitions of variables.

A legend 80 describes each variable and its definition.

$Z = \{z_1, ..., z_N\}$ is the entire set of instances. Each of $z_1, ..., z_N$ denotes an instance. The number of instances is N.

$V = \{v_1, ..., v_N\}$ is the set of feature vectors of instances. The number of dimensions of each feature vector is K.

$C = \{c_1, ..., c_M\}$ is the entire set of classes. Each of $c_1, ..., c_M$ denotes a class. The number of classes is M.

$Z_C = \{Z_{c\_1}, ..., Z_{c\_M}\}$ is a set that includes a set of instances for each class as an element. Each of $Z_{c\_1}, ..., Z_{c\_M}$ denotes a set of instances of the corresponding class.

$Z_{c\_m} = \{z_{c\_m}^1, ..., z_{c\_m}^{N\_c\_m}\}$ is the set of instances in the class $c_m$. Each of $z_{c\_m}^1, ..., z_{c\_m}^{N\_c\_m}$ denotes an instance of the class $c_m$. The number of instances in the class $c_m$ is $N_{c\_m}$.

$V_C = \{V_{c\_1}, ..., V_{c\_M}\}$ is the set of coordinate systems for the respective classes, i.e., the set of class coordinate systems. A class coordinate system is K-dimensional because it is included in the feature space. Each of $V_{c\_1}, ..., V_{c\_M}$ is information on the class coordinate system for the corresponding class. For example, the information on the class coordinate system may include information on vectors representing the axial directions of the class coordinate system in the feature space. The information on the class coordinate system may include information indicating an operation of converting a feature vector in the feature space into coordinates in the class coordinate system.

$o_C = \{o_{c\_1}, ..., o_{c\_M}\}$ represents the centroid coordinates (class centroid coordinates) of each class in the feature space.

$a_{c\_m} = \{a_{c\_m}^1, ..., a_{c\_m}^K\}$ represents the cluster end coordinates in the K axial directions of the class $c_m$ in the feature space.

$b_C = \{b_{c\_1}, ..., b_{c\_M}\}$ is a set that includes a set of the coordinates of instances for each class coordinate system as an element. Each of $b_{c\_1}, ..., b_{c\_M}$ is the set of the coordinates of the instances in the class coordinate system in the corresponding class.

$b_{c\_m} = \{b_{c\_m}^1, ..., b_{c\_m}^{N\_c\_m}\}$ is the set of the coordinates of the instances in the class coordinate system of the class $c_m$. Each of $b_{c\_m}^1, ..., b_{c\_m}^{N\_c\_m}$ denotes the coordinates of an instance in the class coordinate system of the class $c_m$.

$p_C = \{p_{c\_1}^{(\cdot)}, ..., p_{c\_M}^{(\cdot)}\}$ is the set of parameters for the respective classes. Each of $p_{c\_1}^{(\cdot)}, ..., p_{c\_M}^{(\cdot)}$ denotes a parameter for the corresponding class. The number of dimensions of the parameter is L. Further, the superscript "$(\cdot)$" is a superscript that represents the difference in instances used in parameter search.

$e_C = \{e_{c\_1}, ..., e_{c\_m}\}$ is the set of correction unit vectors for a generic parameter for the respective classes. Each of $e_{c\_1}, ..., e_{c\_m}$ denotes correction unit vectors for the corresponding class.

$e_{c\_m} = \{e_{c\_m}^{a^1}, ..., e_{c\_m}^{a^K}\}$ is the set of correction unit vectors for the generic parameter for the class $c_m$. Here, "a^i" in the subscript indicates "$a^i$". $e_{c\_m}^{a^1}, ..., e_{c\_m}^{a^K}$ denote the correction unit vectors corresponding to the cluster end coordinates $a_{c\_m}^1, ..., a_{c\_m}^K$ of the class $c_m$.

The correction unit vector $e_{c\_m}^{a^i}$ (i = 1, ..., K) is expressed by Equation (7).

$$e_{c_m}^{a^i} = \frac{p_{c_m}^{(a^i)} - p_{c_m}^{(o)}}{|a_{c_m}^i - o_{c_m}|} \tag{7}$$

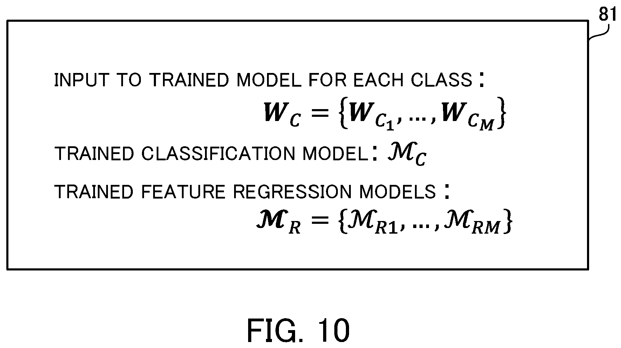

FIG. 10 is a view for describing the definitions of variables.

A legend 81 describes each variable and its definition.

$W_C = \{W_{c\_1}, ..., W_{c\_M}\}$ is the set of input data to a trained model for the respective classes. Each of $W_{c\_1}, ..., W_{c\_M}$ is input data to the trained model for the corresponding class.

$M_C$ indicates a trained classification model.

$M_R = \{M_{R1}, ..., M_{RM}\}$ is the set of trained feature regression models for the respective classes. Each of $M_{R1}, ..., M_{RM}$ denotes a trained feature regression model for the corresponding class. The number following R in a subscript R1, ..., RM corresponds to the numerical value of the subscript of c in each class $c_1, ..., C_M$.

Next, the processing procedure of the data processing apparatus 100 will be described. First, the training process by the training processing unit 150 will be described.

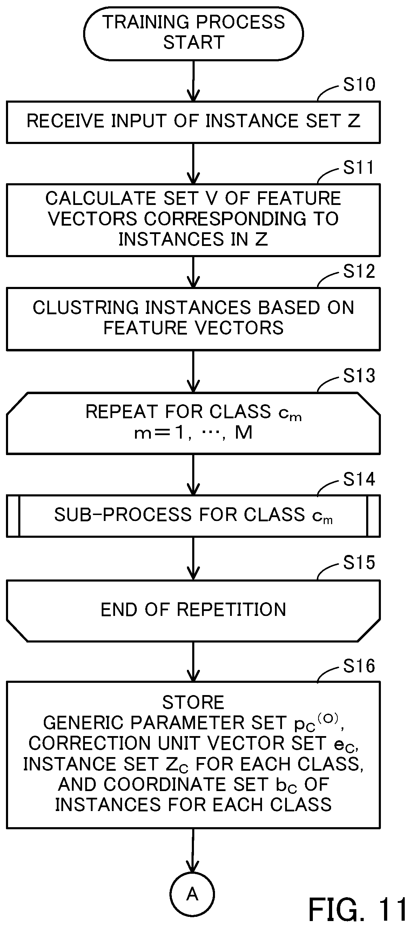

FIG. 11 is a flowchart illustrating an example of the training process.

(S10) The feature extraction unit 151 receives an input of an instance set Z corresponding to an existing instance group 121.

(S11) The feature extraction unit 151 calculates a set V of feature vectors corresponding respectively to the instances in Z.

(S12) The clustering unit 152 clusters the instances based on their feature vectors. As a result of the clustering, each instance is classified into one of classes $c_1$, ...., $c_M$.

(S13) The training processing unit 150 repeatedly executes step S14 for the class $c_m$ (m = 1, ..., M).

(S14) The training processing unit 150 perform a sub-process for the class $c_m$. The details of the sub-process will be described later.

(S15) After step S14 is repeatedly executed for all classes, the training processing unit 150 ends the repetitions and advances the process to step S16.

(S16) The training processing unit 150 stores the generic parameter set $p_c^{(o)}$, the correction unit vector set $e_C$, the instance set $Z_C$ for each class, and the coordinate set $b_C$ of the instances for each class, which are obtained as a result of repeating the sub-process of step S14. These pieces of information are stored in, for example, the generic parameter storage unit 140. Then, the process proceeds to steps S17 and S20.

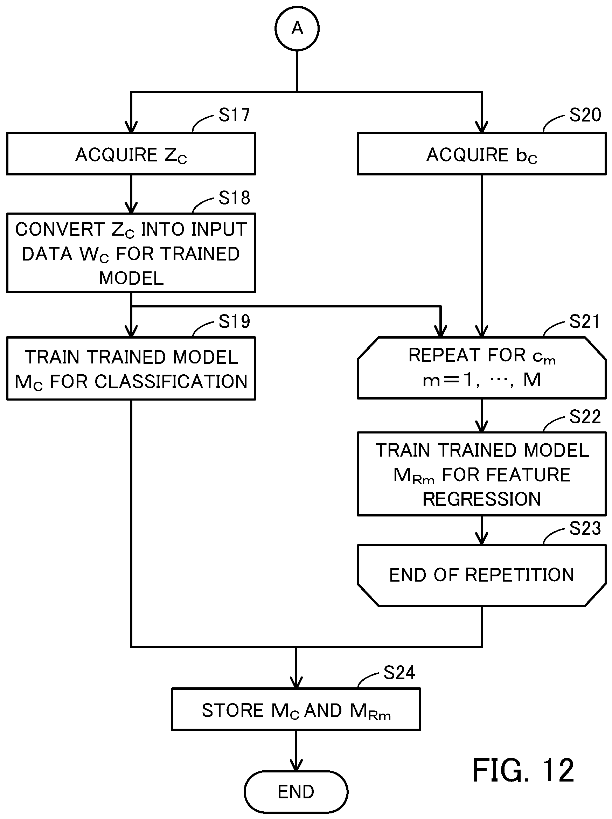

FIG. 12 is a continuation of the flowchart illustrating the example of the training process.

(S17) The input conversion unit 154 acquires $Z_C$.

(S18) The input conversion unit 154 converts $Z_C$ into input data $W_C$ for a trained model. The input data $W_C$ is used in step S19 and steps S21 to S23.

(S19) The classification model training unit 155 trains a trained classification model $M_C$ by performing machine learning using the input data $W_C$ and the class to which the instances are classified. Then, the process proceeds to step S24.

(S20) The feature regression model training unit 157 acquires $b_C$.

(S21) The feature regression model training unit 157 repeatedly executes step S22 for the class $c_m$ (m = 1, ..., M).

(S22) The feature regression model training unit 157 trains a trained feature regression model $M_{Rm}$ by performing machine learning using the input data $W_{c\_m}$ and $b_{c\_m}$.

(S23) After step S22 is repeatedly executed for all classes, the feature regression model training unit 157 ends the repetitions and advances the process to step S24.

(S24) The classification model training unit 155 stores the trained classification model $M_C$ created in step S19 in the trained model storage unit 130. The feature regression model training unit 157 stores the trained feature regression model $M_{Rm}$ created for each class in step S22, in the trained model storage unit 130 in association with the corresponding class. Then, the training process ends.

Here, steps S17 to S19 and steps S20 to S23 may be executed in parallel by different processors or processor cores.

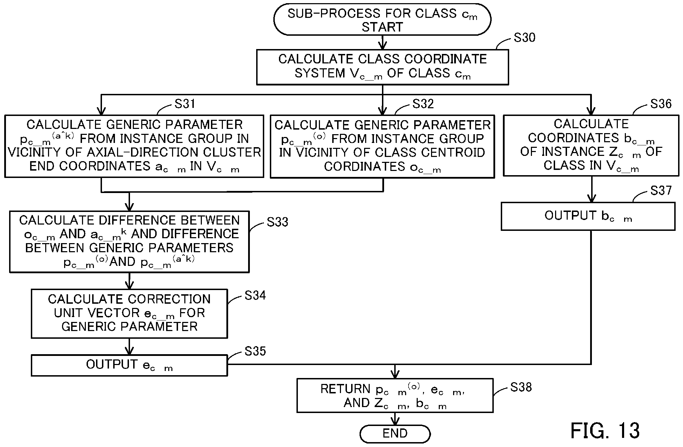

FIG. 13 is a flowchart illustrating an example of the sub-process for the class $c_m$.

The sub-process for the class $c_m$ corresponds to step S14.

(S30) The class coordinate generation unit 153 calculates the class coordinate system $V_{c\_m}$ of the class $c_m$ on the basis of the feature vectors of the instances belonging to $Z_{c\_m}$. As described above, the class coordinate generation unit 153 is able to determine each axial direction of the class coordinate system $V_{c\_m}$ in the feature space by PCA, SVD, or another based on the feature vectors of the instances belonging to $Z_{c\_m}$. The information on the class coordinate system $V_{c\_m}$ may include information indicating an operation of converting a feature vector in the feature space into coordinates in the class coordinate system $V_{c\_m}$. Then, the process proceeds to steps S31, S32, and S36.

(S31) The axial-direction generic parameter search unit 159 determines an instance group having feature vectors in the vicinity of the cluster end coordinates $a_{c\_m}$ corresponding to each axial direction of $V_{c\_m}$ in the feature space. The axial-direction generic parameter search unit 159 calculates a generic parameter $p_{c\_m}^{(a^k)}$ through a parameter search using the instance group. Here, k = 1, ..., K. Then, the process proceeds to step S33.

(S32) The generic parameter search unit 158 determines an instance group having feature vectors in the vicinity of the class centroid coordinates $o_{c\_m}$. The generic parameter search unit 158 calculates the generic parameter $p_{c\_m}^{(o)}$ through a parameter search using the instance group. Then, the process proceeds to step S33.

(S33) The generic parameter correction amount calculation unit 160 calculates the difference between $o_{c\_m}$ and $a_{c\_m}^k$ and the difference between the generic parameters $p_{c\_m}^{(o)}$ and $p_{c\_m}^{(a^k)}$.

(S34) The correction unit vector calculation unit 161 calculates the correction unit vector $e_{c\_m}$ for the generic parameter $p_{c\_m}^{(o)}$ using Equation (7).

(S35) The correction unit vector calculation unit 161 outputs $e_{c\_m}$. Then, the process proceeds to step S38.

(S36) The class coordinate generation unit 153 calculates the coordinates $b_{c\_m}$ of each instance $Z_{c\_m}$ included in the class in the class coordinate system $V_{c\_m}$.

(S37) The class coordinate generation unit 153 outputs $b_{c\_m}$. Then, the process proceeds to step S38.

(S38) The correction unit vector calculation unit 161 returns $p_{c\_m}^{(o)}$ and $e_{c\_m}$. The class coordinate generation unit 153 returns $Z_{c\_m}$ and $b_{c\_m}$. Then, the sub-process for the class $c_m$ ends.

Here, step S31 and step S32 may be executed in parallel by different processors or processor cores. Further, steps S36 and S37 may be executed in parallel to steps S31 to S35 by a processor or a processor core different from a processor or a processor core that executes steps S31 to S35.

Steps S20 to S23 in FIG. 12 are executable after $b_{c\_m}$ for the class $c_m$ is obtained. Therefore, for each class $c_m$, steps S20 to S23 may be executed before steps S31 to S35 or may be executed in parallel to steps S31 to S35. In this case, a process of converting $Z_{c\_m}$ into input data $W_{c\_m}$ is performed separately from step S18, and the input data $W_{c\_m}$ is used for training the trained feature regression model $M_{Rm}$.

Next, the prediction process performed by the prediction processing unit 170 will be described.

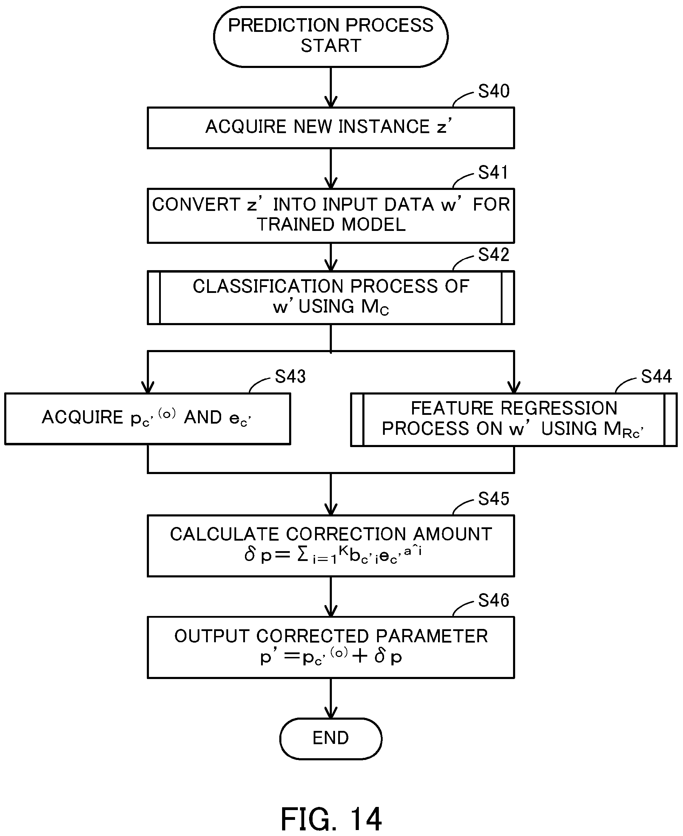

FIG. 14 is a flowchart illustrating an example of the prediction process.

(S40) The input conversion unit 171 acquires a new instance z'.

(S41) The input conversion unit 171 converts z' into input data w' for a trained model.

(S42) The classification processing unit 172 performs a classification process on w' using the trained classification model $M_C$. The classification process will be described in detail later. As a result of the classification process, a class c' into which w' is classified is obtained. Then, the process proceeds to steps S43 and S44.

(S43) The generic parameter correction unit 174 acquires the generic parameter $p_{c'}^{(o)}$ and the correction unit vector $e_{c'}$ corresponding to the class c' into which w' is classified. Then, the process proceeds to step S45.

(S44) The feature regression processing unit 173 performs a feature regression process on w' using the trained feature regression model $M_{Rc'}$ corresponding to the class c' into which w' is classified. The details of the feature regression process will be described later. As a result of the feature regression process, the coordinates $b_{c'}$ corresponding to w' in the class coordinate system $V_{c\_m}$ are obtained. Then, the process proceeds to step S45.

(S45) The generic parameter correction unit 174 calculates the correction amount $\delta p$. $\delta p$ is expressed by Equation (8).

$$\delta \boldsymbol{p} = \sum_{i=1}^{K} \boldsymbol{b}_{c'i} \boldsymbol{e}_{c'}^{a^i} \tag{8}$$

Here, $b_{c'i}$ is the i-th component of the coordinates $b_{c'}$ and is a component corresponding to $a^i$ of the class c'.

(S46) The generic parameter correction unit 174 calculates a corrected parameter p' and outputs p'. p' is represented by Equation (9). Then, the prediction process ends.

$$\boldsymbol{p'} = \boldsymbol{p}_{c'}^{(o)} + \delta \boldsymbol{p} \tag{9}$$

In this connection, step S43 and step S44 may be executed in parallel by different processors or processor cores.

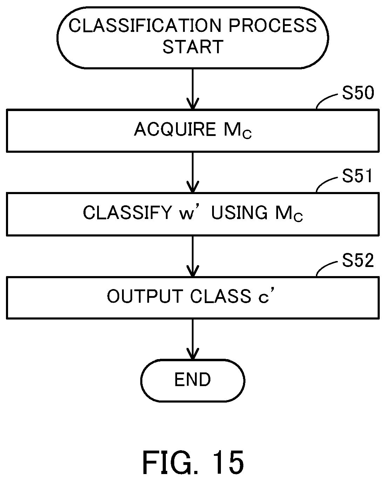

FIG. 15 is a flowchart illustrating an example of the classification process.

The classification process corresponds to step S42.

(S50) The classification processing unit 172 acquires the trained classification model $M_C$ from the trained model storage unit 130.

(S51) The classification processing unit 172 classifies the input data w' obtained by converting the new instance z', using $M_C$ and obtains the class c' into which w' is classified.

(S52) The classification processing unit 172 outputs the class c'. Then, the classification process ends.

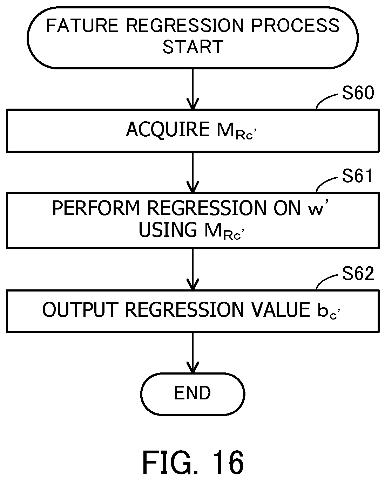

FIG. 16 is a flowchart illustrating an example of the feature regression process.

The feature regression process corresponds to step S44.

(S60) The feature regression processing unit 173 acquires the trained feature regression model $M_{Rc'}$ corresponding to the class c' from the trained model storage unit 130.

(S61) The feature regression processing unit 173 performs regression on w' using $M_{Rc'}$. As a result, a regression value $b_{c'}$ is obtained.

(S62) The feature regression processing unit 173 outputs the regression value $b_{c'}$. The regression value $b_{c'}$ indicates the coordinates corresponding to the new instance z' in the class coordinate system $V_{c\_m}$. Then, the feature regression process ends.

Next, the generic parameter search performed in steps S31 and S32 will be described.

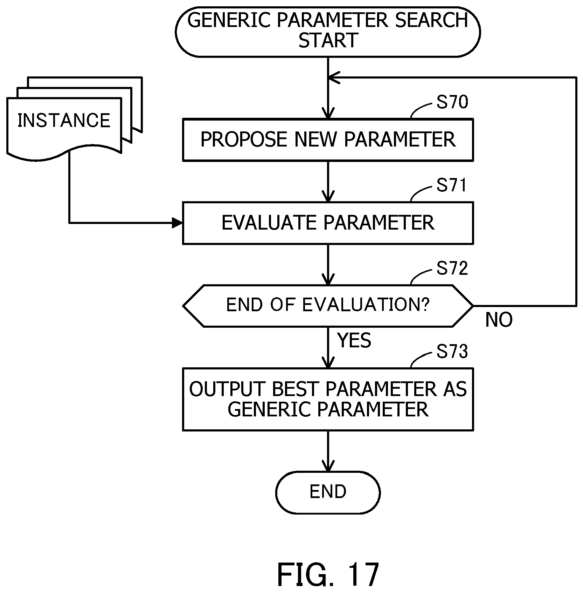

FIG. 17 is a flowchart illustrating an example of the generic parameter search.

The following mainly describes the generic parameter search unit 158 as an example. The axial-direction generic parameter search unit 159 also performs a generic parameter search in the same manner, but uses a different instance group in the generic parameter search in steps S31 and S32.

(S70) The generic parameter search unit 158 proposes a new parameter. In the new parameter proposal, a new set of values for a plurality of parameters is generated through grid search, random search, and TPE for a range of values that each of the plurality of parameters is able to take. The new set of values for the plurality of parameters is referred to as a new parameter.

(S71) The generic parameter search unit 158 solves each of the plurality of instances using the new parameter generated in step S70, and evaluates the new parameter based on the energy of the obtained solutions, the history of state transitions during the solving, and others. For example, the better the energy of a finally obtained solution, the higher the evaluation of the new parameter. Further, for example, the shorter the time until a final solution is obtained, the higher the evaluation of the new parameter. Each instance may be solved using the accelerator card 108.

(S72) The generic parameter search unit 158 determines whether to end the repetitions of the evaluation of the new parameter. In the case of ending the repetitions, the process proceeds to step S73. If not, the process proceeds to step S70. For example, in the case of the grid search, the repetitions end when all the combinations of the values of the plurality of parameters have been processed. In the case of the random search or another, for example, the repetitions end when the number of repetitions reaches a number designated in advance by the user. The evaluation of the new parameter may be repeated, for example, about several hundred times.

(S73) The generic parameter search unit 158 outputs the parameter having the best evaluation result (best parameter) among the new parameters evaluated in step S71 as a generic parameter. Then, the generic parameter search ends.

Next, an example of parameters to be tuned in solving a combinatorial optimization problem will be described.

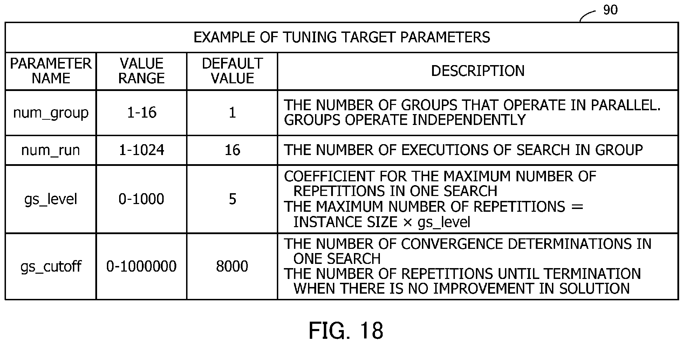

FIG. 18 illustrates an example of tuning target parameters.

Examples of tuning target parameters include tabu tenure in the TS method, and a maximum temperature value and a minimum temperature value in the SA method and the PT method. Examples of other parameters are as follows. Note that the following parameters may be used in any of the TS, SA and PT methods.

A table 90 contains an example of tuning target parameters. The table 90 has the following items: parameter name, value range, default value, and description.

A parameter "num _group" indicates the number of groups that search for solutions in parallel. The groups execute searches independently. The value range of "num _group" is, for example, "1 to 16". The default value of "num _group" is, for example, "1".

A parameter "num _run" indicates the number of executions of search in one group. The value range of "num _run" is, for example, "1 to 1024". The default value of "num _run" is, for example, "16".

A parameter "gs_level" indicates a coefficient for the maximum number of repetitions in one search. The "maximum number of repetitions in one search" is an upper limit allowed per search as the number of state transitions each made by changing one state variable. The "maximum number of repetitions" is determined by, for example, an equation "the maximum number of repetitions = instance size $\times$ gs_level". The instance size is, for example, the size of $W_{ij}$. The value range of "gs _level" is, for example, "0 to 1000". The default value of "gs _level" is, for example, "5".

A parameter "gs_cutoff" indicates the number of convergence determinations in one search. The number of convergence determinations is the number of repetitions of a state transition until termination of the search when there is no improvement in the solution. The value range of of "gs _cutoff" is, for example, "0 to 1000000". The default value of "gs _cutoff" is, for example, "8000".

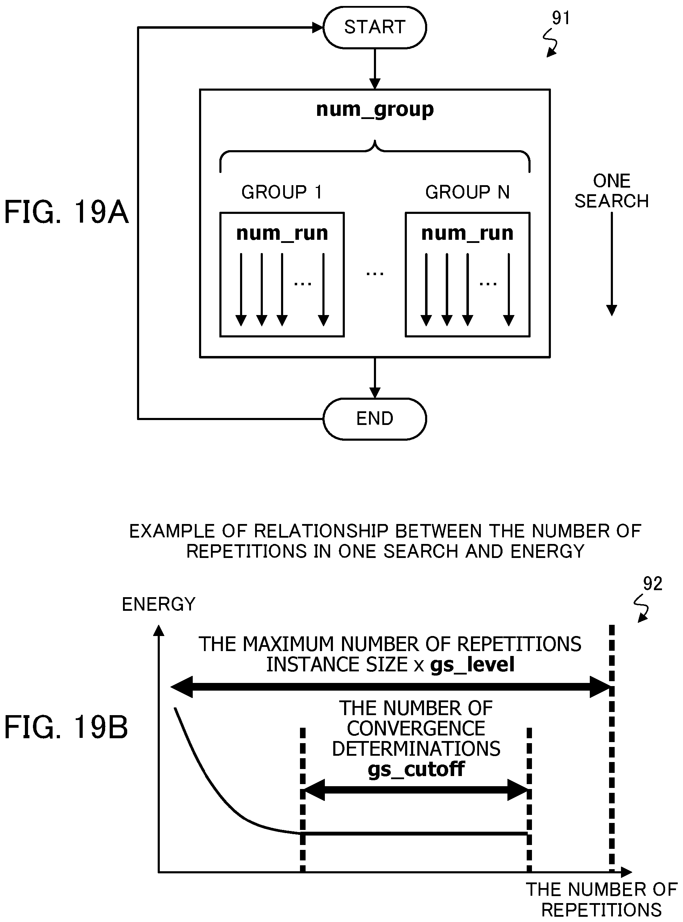

FIGS. 19A and 19B are views for describing tuning target parameters.

FIG. 19A illustrates the parameter "num_group" and the parameter "num_run" as examples. A chart 91 represents the relationship between "num_group" and "num _run". Assume that "num_group" = N. That is, the number of groups that perform searches independently is N. Each group independently searches for a solution using the TS method and the SA method the number of times designated by "num _run". Alternatively, a plurality of groups may execute the PT method in parallel. In this case, each group may be referred to as a replica.

FIG. 19B illustrates a graph 92 as an example. The graph 92 represents an example of the relationship between the number of repetitions of a state transition in one search and the energy of an obtained state. The horizontal axis of the graph 92 represents the number of repetitions of a state transition. The vertical axis of the graph 92 represents the energy of the state calculated based on Equation (1). The maximum number of repetitions of a state transition allowed in one search is determined by "instance size $\times$ gs_level". In addition, the number of convergence determinations used for determining termination of a search when there is no improvement in the solution is determined by the parameter "gs_cutoff".

Note that the above tuning target parameters are merely examples. The data processing apparatus 100 may tune parameters other than the above.

As described above, the data processing apparatus 100 is able to obtain an appropriate value for each of a plurality of parameters used for solving an individual instance. Specifically, based on a feature vector of an individual instance belonging to a certain class, the data processing apparatus 100 corrects a generic value for each parameter corresponding to the class, thereby obtaining a more appropriate value than the generic value for the individual instance.

The data processing apparatus 100 is able to improve the solving performance by using the corrected value for each parameter in solving the instance, compared to the case of using the generic value for each parameter.

In addition, the data processing apparatus 100 inputs information on a new instance to the trained feature regression model to predict the coordinates $b_c$, in the class coordinate system, which makes it possible to obtain the corrected parameter p' for solving the new instance through simple calculation as in Equations (8) and (9). Therefore, the data processing apparatus 100 is able to obtain the values of a plurality of parameters used for the problem solving at high speed.

Here, the data processing apparatus 100 does not directly regress the value of each parameter in response to an instance, but regresses the coordinates in the class coordinate system in the feature space (i.e., the feature vector converted into the class coordinate system) in response to the instance. The reason is as follows.

For example, in the case of creating a trained model that directly regresses the value of each parameter, the values of the parameters corresponding to each existing instance are obtained through a parameter search and are input to the trained model, in order to create the trained model. However, the parameter search for each existing instance is excessively time-consuming. as dimensions for prediction, the number of dimensions K of the feature space is usually smaller than the number of dimensions L of the parameter space. In one example, K = 3 and L = 10. Therefore, by uses the coordinates (the number of dimensions K) in the class coordinate system in the feature space as the regression value of the trained model, the data processing apparatus 100 is able to achieve speed-up of the training process and the prediction process, compared to the case of directly regressing the value of each parameter.

As described above, the data processing apparatus 100 performs the following process.

The training processing unit 150 acquires a plurality of instances classified into the same class, each instance being information indicating a problem to be solved. The training processing unit 150 obtains a plurality of feature vectors corresponding to the plurality of instances. The training processing unit 150 obtains the class centroid coordinates corresponding to the class, calculated from the plurality of feature vectors. The training processing unit 150 obtains a set of first generic values for a plurality of parameters, the first generic values being obtained through a parameter search using a first instance group among the plurality of instances. The training processing unit 150 determines a plurality of axial directions that define a class coordinate system having its origin at the class centroid coordinates, based on the plurality of feature vectors. The training processing unit 150 extracts a plurality of second instance groups corresponding to the plurality of axial directions from the plurality of instances on the basis of the plurality of feature vectors and the plurality of axial directions. The training processing unit 150 obtains, for each of the plurality of second instance groups, a set of second generic values for the plurality of parameters through a parameter search using the second instance group. The training processing unit 150 generates, for each second instance group, unit vectors representing correction directions for the set of first generic values, based on the first feature vectors corresponding to the second instance group, the class centroid coordinates, the set of first generic values, and the set of second generic values. Using the plurality of instances and the plurality of coordinates corresponding to the plurality of feature vectors in the class coordinate system, the training processing unit 150 creates a trained model that receives an instance belonging to the class as an input and outputs the coordinates corresponding to the instance in the class coordinate system. When receiving a first instance classified into the class as an input, the prediction processing unit 170 obtains the first coordinates corresponding to the first instance in the class coordinate system, using the first instance and the trained model. The prediction processing unit 170 calculates values for the plurality of parameters used for solving the first instance, based on the set of first generic values, the unit vectors, and the first coordinates.

Thus, the data processing apparatus 100 is able to obtain an appropriate value for each of the plurality of parameters used for solving the individual instance.

For example, the plurality of axial directions are a plurality of principal component directions determined based on the plurality of feature vectors. Thus, the data processing apparatus 100 is able to easily determine the axial directions of the class coordinate system of the class using a method such as PCA or SVD.

In addition, the training processing unit 150 is able to extract a plurality of second instance groups corresponding to a plurality of axial directions as follows. The training processing unit 150 obtains a first feature vector representing an end of a distribution of points indicated by a plurality of feature vectors, for each of the plurality of axial directions. The training processing unit 150 extracts, as a second instance group corresponding to each of the plurality of axial directions, instances having feature vectors included in a region within a predetermined range centered on a point indicated by the first feature vector corresponding to the axial direction from among the plurality of instances.

Thus, the data processing apparatus 100 is able to obtain appropriate second instance groups so that displacement directions from the set of first generic values in the parameter space are obtained with respect to the coordinates of the instance in the class coordinate system. In addition, the data processing apparatus 100 is able to enhance the accuracy of the unit vectors for correcting the generic parameters, the unit vectors being obtained for the components of the coordinates of the instance in the class coordinate system. Here, "a feature vector is included in a predetermined region in the feature space" indicates that the point indicated by the feature vector is present in the predetermined region.

Further, the first instance group used for obtaining the set of first generic values may be a set of instances having feature vectors included in a region within a predetermined range centered on the class centroid coordinates. In this case, the data processing apparatus 100 is able to enhance the accuracy of the unit vectors for correcting generic parameters, the unit vectors being obtained for the components of the coordinates of the instance in the class coordinate system.

The data processing apparatus 100 may solve the first instance using the calculated values of the plurality of parameters. For example, the data processing apparatus 100 may input the first instance and the calculated values of the plurality of parameters to a search unit, which is implemented by the processor 101 or the processor 110, to solve the first instance using the TS method, the SA method, the PT method, or another. Thus, the data processing apparatus 100 is able to improve the solving performance for the first instance. For example, the data processing apparatus 100 is able to increase the likelihood of reaching a better solution in a short time in solving the first instance.

An apparatus including the training processing unit 150 and an apparatus including the prediction processing unit 170 may be different from each other. In this case, functions equivalent to those of the data processing apparatus 100 are implemented by a data processing system including the apparatus including the training processing unit 150 and the apparatus including the prediction processing unit 170.

The plurality of processes performed by the training processing unit 150 as described above may be performed by different processors or processor cores, or one or more processes among the plurality of processes may be performed by the same processor or processor core. The plurality of processes performed by the prediction processing unit 170 as described above may be performed by different processors or processor cores, or one or more processes among the plurality of processes may be performed by the same processor or processor core.

The information processing of the first embodiment may be implemented by causing the processing unit 12 to execute a program. The information processing of the second embodiment may be implemented by causing the processor 101 to execute a program. The program may be stored in the computer-readable storage medium 53.

For example, the program may be distributed by distributing the storage medium 53 in which the program is stored. The program may be stored in another computer and distributed via a network. For example, the computer may store (install) the program stored in the storage medium 53 or the program received from another computer in a storage device such as the RAM 102 or the HDD 103, read the program from the storage device, and execute the program.

In one aspect, it is possible to obtain appropriate values for parameters.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A data processing method executed by a data processing system (10), the data processing method comprising:

    acquiring a plurality of instances classified into a same class, a plurality of feature vectors corresponding to the plurality of instances, class centroid coordinates corresponding to the class, and a set of first generic values for a plurality of parameters, each of the instances being information indicating a problem to be solved, the class centroid coordinates being calculated from the plurality of feature vectors, the first generic values being obtained through a parameter search using a first instance group among the plurality of instances;
    determining a plurality of axial directions (d1, d2) defining a class coordinate system (31) having an origin corresponding to the class centroid coordinates, based on the plurality of feature vectors, extracting a plurality of second instance groups corresponding to the plurality of axial directions from the plurality of instances, based on the plurality of feature vectors and the plurality of axial directions, and obtaining, for each second instance group of the plurality of second instance groups, a set of second generic values for the plurality of parameters through the parameter search using said each second instance group;
    generating, for said each second instance group, a unit vector representing a correction direction with respect to the set of the first generic values, based on a first feature vector corresponding to said each second instance group, the class centroid coordinates, the set of the first generic values, and the set of the second generic values;
    creating a trained model (M1) using the plurality of instances and a plurality of coordinates corresponding to the plurality of feature vectors in the class coordinate system, the trained model being configured to receive an input of an instance belonging to the class and output coordinates corresponding to the instance in the class coordinate system;
obtaining, upon receiving an input of a first instance (A1) classified into the class, first coordinates corresponding to the first instance in the class coordinate system using the first instance and the trained model; and calculating values for the plurality of parameters used for solving the first instance, based on the set of first generic values, unit vectors generated for the plurality of second instance groups, and the first coordinates.

2. The data processing method according to claim 1, wherein the plurality of axial directions (d1, d2) are a plurality of principal component directions determined based on the plurality of feature vectors.

3. The data processing method according to claim 1 or 2, wherein the extracting of the plurality of second instance groups corresponding to the plurality of axial directions (d1, d2) includes

obtaining, for each axial direction of the plurality of axial directions, the first feature vector representing an end of a distribution of points indicated by the plurality of feature vectors, and

extracting, from the plurality of instances, instances having feature vectors included in a region within a predetermined range centered on a point indicated by the first feature vector corresponding to said each axial direction, as one of the plurality of second instance groups corresponding to said each axial direction.

4. The data processing method according to any of the preceding claims, wherein the first instance group is a set of instances having feature vectors included in a region within a predetermined range centered on the class centroid coordinates.

5. The data processing method according to any of the preceding claims, further includes solving, by the data processing system (10), the first instance (A1) using the calculated values for the plurality of parameters.

6. The data processing method according to any of the preceding claims, wherein the plurality of instances are classified into the same class based on similarity among the plurality of feature vectors.

7. A data processing apparatus comprising:

storage means (11) for storing a plurality of instances classified into a same class, a plurality of feature vectors corresponding to the plurality of instances, class centroid coordinates corresponding to the class, and a set of first generic values for a plurality of parameters, each of the instances being information indicating a problem to be solved, the class centroid coordinates being calculated from the plurality of feature vectors, the first generic values being obtained through a parameter search using a first instance group among the plurality of instances; and

processing means (12) for:

determining a plurality of axial directions (d1, d2) defining a class coordinate system (31) having an origin corresponding to the class centroid coordinates, based on the plurality of feature vectors, extracting a plurality of second instance groups corresponding to the plurality of axial directions from the plurality of instances, based on the plurality of feature vectors and the plurality of axial directions, and obtaining, for each second instance group of the plurality of second instance groups, a set of second generic values for the plurality of parameters through the parameter search using said each second instance group;

generating, for said each second instance group, a unit vector representing a correction direction with respect to the set of the first generic values, based on a first feature vector corresponding to said each second instance group, the class centroid coordinates, the set of the first generic values, and the set of the second generic values;

creating a trained model (M1) using the plurality of instances and a plurality of coordinates corresponding to the plurality of feature vectors in the class coordinate system, the trained model being configured to receive an input of an instance belonging to the class and output coordinates corresponding to the instance in the class coordinate system;

obtaining, upon receiving an input of a first instance (A1) classified into the class, first coordinates corresponding to the first instance in the class coordinate system using the first instance and the trained model; and

calculating values for the plurality of parameters used for solving the first instance, based on the set of first generic values, unit vectors generated for the plurality of second instance groups, and the first coordinates.

8. A computer program that causes a computer to perform a process comprising:

acquiring a plurality of instances classified into a same class, a plurality of feature vectors corresponding to the plurality of instances, class centroid coordinates corresponding to the class, and a set of first generic values for a plurality of parameters, each of the instances being information indicating a problem to be solved, the class centroid coordinates being calculated from the plurality of feature vectors, the first generic values being obtained through a parameter search using a first instance group among the plurality of instances;

determining a plurality of axial directions (d1, d2) defining a class coordinate system (31) having an origin corresponding to the class centroid coordinates, based on the plurality of feature vectors, extracting a plurality of second instance groups corresponding to the plurality of axial directions from the plurality of instances, based on the plurality of feature vectors and the plurality of axial directions, and obtaining, for each second instance group of the plurality of second instance groups, a set of second generic values for the plurality of parameters through the parameter search using said each second instance group;

generating, for said each second instance group, a unit vector representing a correction direction with respect to the set of the first generic values, based on a first feature vector corresponding to said each second instance group, the class centroid coordinates, the set of the first generic values, and the set of the second generic values; and

creating a trained model (M1) using the plurality of instances and a plurality of coordinates corresponding to the plurality of feature vectors in the class coordinate system, the trained model being configured to receive an input of an instance belonging to the class and output coordinates corresponding to the instance in the class coordinate system.

9. A computer program that causes a computer to perform a process comprising:

obtaining, upon receiving an input of a first instance (A1) classified into a predetermined class, first coordinates corresponding to the first instance in a class coordinate system using a trained model (M1), the first instance being information indicating a problem to be solved, the trained model being configured to receive an input of an instance belonging to the predetermined class and output coordinates corresponding to a feature vector of the instance in the class coordinate system; and

calculating values for a plurality of parameters used for solving the first instance, based on a set of first generic values for the plurality of parameters, predetermined unit vectors representing correction directions for the set of first generic values, and the first coordinates, the first generic values being obtained through a parameter search using a first instance group among a plurality of instances belonging to the predetermined class.

FIG. 1

DATA PROCESSING APPARATUS — 100

PROCESSOR — 101

GPU — 104

DISPLAY — 51

RAM — 102

INPUT INTERFACE — 105

INPUT DEVICE — 52

HDD — 103

MEDIA READER — 106

STORAGE MEDIUM — 53

COMMUNI-CATION INTERFACE — 107

NETWORK — 54

BUS

ACCELERATOR CARD — 108

PROCESSOR — 110

RAM — 102a

FIG. 2

FIG. 3

FIG. 4

FIG. 5A

TRAINED MODEL STORAGE UNIT — 130

TRAINED CLASSIFICATION MODEL — 131

CLASS C1

TRAINED FEATURE REGRESSION MODEL — 132

FIG. 5B

GENERIC PARAMETER STORAGE UNIT — 140

CLASS C1

GENERIC PARAMETER
$p_o = (p_{o1}, p_{o2}, ...)$

CORRECTION UNIT VECTORS
$e_{p1}, e_{p2}, ...$

## FIG. 6

DATA PROCESSING APPARATUS 100

TRAINED MODEL STORAGE UNIT 130

131 — TRAINED CLASSIFICATION MODEL

132 — TRAINED FEATURE REGRESSION MODEL FOR CLASS Cx

GENERIC PARAMETER STORAGE UNIT 140

CLASS Cx

GENERIC PARAMETER

CORRECTION UNIT VECTORS FOR GENERIC PARAMETER

INSTANCE STORAGE UNIT 120

NEW INSTANCE 122

PREDICTION PROCESSING UNIT 170

INPUT CONVERSION UNIT 171

CLASSIFICATION PROCESSING UNIT 172

FEATURE REGRESSION PROCESSING UNIT 173

GENERIC PARAMETER CORRECTION UNIT 174

CORRECTED PARAMETER

FIG. 7

FEATURE SPACE     CORRESPONDENCE BETWEEN DISPLACEMENT DIRECTIONS     PARAMETER SPACE

## FIG. 8

80

INSTANCES : $Z = \{z_1, \ldots, z_N\}$

THE NUMBER OF INSTANCES : $N$

FEATURE VECTORS OF INSTANCES : $V = \{v_1, \ldots, v_N\}$

DIMENSIONALITY OF FEATURE VECTOR : $K$ DIMENSIONS

CLASSES : $C = \{c_1, \ldots, c_M\}$

THE NUMBER OF CLASSES : $M$

INSTANCES FOR EACH CLASS : $Z_C = \{Z_{c_1}, \ldots, Z_{c_M}\}$

INSTANCES IN CLASS : $Z_{c_m} = \{z_{c_m}^1, \ldots, z_{c_m}^{N_{c_m}}\}$

THE NUMBER OF INSTANCES IN CLASS : $N_{c_m}$

COORDINATE SYSTEM FOR EACH CLASS : $V_C = \{V_{c_1}, \ldots, V_{c_M}\}$

($K$ DIMENSIONS BECAUSE IT IS INCLUDED IN FEATURE SPACE)

CENTROID COORDINATES OF EACH CLASS : $o_C = \{o_{c_1}, \ldots, o_{c_M}\}$

CLUSTER END COORDINATES IN $K$ AXIAL DIRECTIONS OF CLASS :

$$a_{c_m} = \{a_{c_m}^1, \ldots, a_{c_m}^K\}$$

COORDINATES OF INSTANCES FOR EACH CLASS COORDINATE SYSTEM :

$$b_C = \{b_{c_1}, \ldots, b_{c_M}\}$$

COORDINATES OF INSTANCES IN CLASS COORDINATE SYSTEM OF CLASS :

$$b_{c_m} = \{b_{c_m}^1, \ldots, b_{c_m}^{N_{c_m}}\}$$

PARAMETERS : $p_C = \{p_{c_1}^{(\cdot)}, \ldots, p_{c_M}^{(\cdot)}\}$

(SUPERSCRIPT REPRESENTING DIFFERENCE IN INSTANCES USED IN PARAMETER SEARCH : $(\cdot)$ )

DIMENSIONALITY OF PARAMETER : $L$ DIMENSIONS

CORRECTION UNIT VECTORS FOR GENERIC PARAMETER FOR EACH CLASS :

$$e_C = \{e_{c_1}, \ldots, e_{c_m}\}$$

CORRECTION UNIT VECTORS FOR GENERIC PARAMETER FOR CLASS :

$$e_{c_m} = \{e_{c_m}^{a^1}, \ldots, e_{c_m}^{a^K}\}, \quad e_{c_m}^{a^i} = \frac{p_{c_m}^{(a^i)} - p_{c_m}^{(o)}}{|a_{c_m}^i - o_{c_m}|}$$

FIG. 9

INPUT TO TRAINED MODEL FOR EACH CLASS :

$$W_C = \{W_{C_1}, ..., W_{C_M}\}$$

TRAINED CLASSIFICATION MODEL : $\mathcal{M}_C$

TRAINED FEATURE REGRESSION MODELS :

$$\mathcal{M}_R = \{\mathcal{M}_{R1}, ..., \mathcal{M}_{RM}\}$$

81

# FIG. 10

TRAINING PROCESS
START

S10

RECEIVE INPUT OF INSTANCE SET Z

S11

CALCULATE SET V OF FEATURE
VECTORS CORRESPONDING TO
INSTANCES IN Z

S12

CLUSTRING INSTANCES BASED ON
FEATURE VECTORS

S13

REPEAT FOR CLASS $c_m$
$m = 1, \cdots, M$

S14

SUB-PROCESS FOR CLASS $c_m$

S15

END OF REPETITION

S16

STORE
GENERIC PARAMETER SET $p_C^{(O)}$,
CORRECTION UNIT VECTOR SET $e_C$,
INSTANCE SET $Z_C$ FOR EACH CLASS,
AND COORDINATE SET $b_C$ OF
INSTANCES FOR EACH CLASS

A

FIG. 11

(A)

ACQUIRE $Z_C$ — S17

ACQUIRE $b_C$ — S20

CONVERT $Z_C$ INTO INPUT DATA $W_C$ FOR TRAINED MODEL — S18

TRAIN TRAINED MODEL $M_C$ FOR CLASSIFICATION — S19

REPEAT FOR $c_m$ $m = 1, \cdots, M$ — S21

TRAIN TRAINED MODEL $M_{Rm}$ FOR FEATURE REGRESSION — S22

END OF REPETITION — S23

STORE $M_C$ AND $M_{Rm}$ — S24

END

FIG. 12

FIG. 13

PREDICTION PROCESS
START

↓

S40

ACQUIRE NEW INSTANCE z'

↓

S41

CONVERT z' INTO INPUT DATA w' FOR
TRAINED MODEL

↓

S42

CLASSIFICATION PROCESS OF
w' USING $M_C$

↓

S43

ACQUIRE $p_{c'}{}^{(o)}$ AND $e_{c'}$

S44

FEATURE REGRESSION
PROCESS ON w' USING $M_{Rc'}$

↓

S45

CALCULATE CORRECTION AMOUNT
$\delta p = \sum_{i=1}^{K} b_{c'i} e_{c'}{}^{\hat{a}_i}$

↓

S46

OUTPUT CORRECTED PARAMETER
$p' = p_{c'}{}^{(o)} + \delta p$

↓

END

# FIG. 14

CLASSIFICATION PROCESS
START

S50
ACQUIRE $M_C$

S51
CLASSIFY $w'$ USING $M_C$

S52
OUTPUT CLASS $c'$

END

FIG. 15

```
┌─────────────────────────────────┐
│  FATURE REGRESSION PROCESS      │
│           START                 │
└─────────────────────────────────┘
              │
              ▼                    ╭─ S60
┌─────────────────────────────────┐
│        ACQUIRE $M_{Rc'}$         │
└─────────────────────────────────┘
              │
              ▼                    ╭─ S61
┌─────────────────────────────────┐
│   PERFORM REGRESSION ON $w'$     │
│        USING $M_{Rc'}$           │
└─────────────────────────────────┘
              │
              ▼                    ╭─ S62
┌─────────────────────────────────┐
│  OUTPUT REGRESSION VALUE $b_{c'}$│
└─────────────────────────────────┘
              │
              ▼
         ┌─────────┐
         │   END   │
         └─────────┘
```

# FIG. 16

GENERIC PARAMETER SEARCH START

INSTANCE

PROPOSE NEW PARAMETER ⌐S70

EVALUATE PARAMETER ⌐S71

END OF EVALUATION? ⌐S72

NO

YES

OUTPUT BEST PARAMETER AS GENERIC PARAMETER ⌐S73

END

FIG. 17

90

| EXAMPLE OF TUNING TARGET PARAMETERS | | | |
|---|---|---|---|
| PARAMETER NAME | VALUE RANGE | DEFAULT VALUE | DESCRIPTION |
| num_group | 1-16 | 1 | THE NUMBER OF GROUPS THAT OPERATE IN PARALLEL. GROUPS OPERATE INDEPENDENTLY |
| num_run | 1-1024 | 16 | THE NUMBER OF EXECUTIONS OF SEARCH IN GROUP |
| gs_level | 0-1000 | 5 | COEFFICIENT FOR THE MAXIMUM NUMBER OF REPETITIONS IN ONE SEARCH THE MAXIMUM NUMBER OF REPETITIONS = INSTANCE SIZE × gs_level |
| gs_cutoff | 0-1000000 | 8000 | THE NUMBER OF CONVERGENCE DETERMINATIONS IN ONE SEARCH THE NUMBER OF REPETITIONS UNTIL TERMINATION WHEN THERE IS NO IMPROVEMENT IN SOLUTION |

FIG. 18

FIG. 19A

START

91

num_group

GROUP 1          GROUP N

num_run          num_run

...        ...        ...

ONE
SEARCH

END

EXAMPLE OF RELATIONSHIP BETWEEN THE NUMBER OF
REPETITIONS IN ONE SEARCH AND ENERGY

92

ENERGY

THE MAXIMUM NUMBER OF REPETITIONS
INSTANCE SIZE x gs_level

FIG. 19B

THE NUMBER OF
CONVERGENCE
DETERMINATIONS
gs_cutoff

THE NUMBER OF
REPETITIONS

Europäisches
Patentamt
European
Patent Office
Office européen
des brevets

# EUROPEAN SEARCH REPORT

**Application Number**

EP 25 18 9759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 287 079 A1 (FUJITSU LTD [JP]) 6 December 2023 (2023-12-06) * paragraph [0020] - paragraph [0022]; figures 1,5 * * paragraph [0100] * ----- | 1-9 | INV. G06N20/00 G06F17/10 |

TECHNICAL FIELDS
SEARCHED      (IPC)

G06N
G06F

The present search report has been drawn up for all claims

| Place of search | Date of completion of the search | Examiner |
|---|---|---|
| The Hague | 15 December 2025 | Falco, Gabriele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 18 9759

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2025

| Patent document cited in search report | Publication date | Patent family member(s) | Publication date |
|---|---|---|---|
| EP 4287079 A1 | 06-12-2023 | EP 4287079 A1 | 06-12-2023 |
| | | JP 2023177389 A | 14-12-2023 |
| | | US 2023394106 A1 | 07-12-2023 |

EPO FORM P0459

For more details about this annex : see Official Journal of the European Patent Office, No. 12/82

**REFERENCES CITED IN THE DESCRIPTION**

**Patent documents cited in the description**

- JP 11306222 A
- JP 2022512195 A
- JP 2023544335 A
- US 20220092869
- US 202000364406